# EUROPEAN PATENT APPLICATION

(11) **EP 4 745 742 A1**
(43) Date of publication of application: **20.05.2026**
(21) Application number: 24884092.8
(22) Date of filing: 06.08.2024
(51) Int. Cl.: G06F 3/04845

(54) **PICTURE PROCESSING METHOD, ELECTRONIC DEVICE AND STORAGE MEDIUM**

(30) Priority: 03.11.2023 CN 202311461263; 17.11.2023 CN 202311556165
(71) Applicant: Honor Device Co., Ltd., Shenzhen, Guangdong 518040 (CN)
(72) Inventor: ZHANG, Jie, Shenzhen, Guangdong 518040 (CN)
(74) Representative: MERH-IP Matias Erny Reichl Hoffmann Patentanwälte PartG mbB
(86) International application number: PCT/CN2024/110056
(87) International publication number: WO 2025/092085

(57) **Abstract**

Embodiments of this application provide a picture processing method, an electronic device, and a storage medium, which are applied to the field of image processing technologies, enabling elimination processing to be performed on pictures more efficiently and flexibly. The picture processing method includes: displaying an editing interface of a first picture, where the first picture includes a first image and a stackable element; controlling, in response to detecting an elimination operation on a first element in the first image, to stop display of the stackable element on the editing interface; eliminating the first element on the editing interface in response to the elimination operation on the first element in the first image; and displaying, on the editing interface, the first image from which the first element has been eliminated, and restoring display of the stackable element.

## Description

This application claims priority to Chinese Patent Application No. 202311461263.8, filed with the China National Intellectual Property Administration on November 3, 2023 and entitled "OPERATING METHOD FOR ELIMINATION IN MOBILE PHONE PICTURE EDITING", and Chinese Patent Application No. 202311556165.2, filed with the China National Intellectual Property Administration on November 17, 2023 and entitled "PICTURE PROCESSING METHOD, ELECTRONIC DEVICE, AND STORAGE MEDIUM", which are incorporated herein by reference in their entireties.

### TECHNICAL FIELD

Embodiments of this application relate to the field of image processing technologies, and in particular, to a picture processing method, an electronic device, and a storage medium.

### BACKGROUND

With the development of electronic devices, the electronic devices can support increasingly diversified picture processing functions. Users can process pictures through editing functions of applications used for processing pictures in the electronic devices. For example, an electronic device may beautify a portrait in a picture, adjust a size of the picture, perform elimination processing on an object in the picture, or the like.

For example, when an electronic device performs elimination processing on an element in a picture, the processing efficiency is relatively low, and the flexibility and convenience are relatively poor. The picture processing result may not meet the user expectation, affecting the user experience.

### SUMMARY

Embodiments of this application provide a picture processing method, an electronic device, and a storage medium. After an electronic device eliminates an element in a first picture on an editing interface of the first picture, the picture after the elimination processing is directly displayed on the editing interface. Not only operations in the entire elimination process are simple, but also the elimination effect can be intuitively seen, and the elimination process is efficient and flexible. During execution of the elimination operation, no stackable element is displayed on the editing interface, and after the elimination operation is completed, a stackable element is redisplayed on the editing interface, avoiding the problem that the stackable element blocks other elements in the picture, resulting in the incapability to accurately process the other elements in the picture.

To achieve the foregoing objective, the following technical solutions are used in the embodiments of this application:

According to a first aspect, this application provides a picture processing method, including:
displaying an editing interface of a first picture, where the first picture includes a first image and a stackable element; controlling, in response to detecting an elimination operation on a first element in the first image, to stop display of the stackable element on the editing interface; eliminating the first element on the editing interface in response to the elimination operation on the first element in the first image; and displaying, on the editing interface, the first image from which the first element has been eliminated, and restoring display of the stackable element.

The stackable element may be text, a doodle, a watermark, a sticker, or the like.

It may be understood as that on the editing interface of the first picture, starting from detecting the elimination operation on the first element, the electronic device may control to stop display of the stackable element on the editing interface, to prevent the stackable element from blocking an element in the first picture, resulting in that a user cannot accurately eliminate the element in the first picture.

Optionally, the displaying, on the editing interface, the first image from which the first element has been eliminated, and restoring display of the stackable element includes:
in response to completion of the elimination operation, displaying, on the editing interface, the first image from which the first element has been eliminated, and restoring display of the stackable element.

In one case, when the electronic device detects that the elimination operation is completed, the electronic device controls to restore display of the stackable element on the editing interface.

Optionally, the controlling, in response to detecting an elimination operation on a first element in the first image, to stop display of the stackable element on the editing interface includes:
in response to detecting the elimination operation on the first element in the first picture, if it is determined that a distance between a first stackable element and a first position is less than a first distance, controlling to stop display of the first stackable element, where the first position is a position at which the elimination operation is performed on a display screen; and

The foregoing picture processing method may further include:
if it is determined that a distance between a second stackable element and the first position is greater than the first distance, controlling to continue display of the second stackable element.

Optionally, the foregoing picture processing method further includes:
restoring display of the first stackable element when the distance between the first stackable element that has been stopped from being displayed and the first position is greater than the first distance.

It may be understood as that when the stackable element is relatively close to the position at which the elimination operation is performed on the display screen, to prevent the stackable element from affecting other elements in the picture, the stackable element may be controlled to stop from being displayed. When the stackable element is relatively far away from the position at which the elimination operation is performed on the display screen, the stackable element does not affect an element to be eliminated, so that the stackable element does not need to be controlled to stop from being displayed. Optionally, the editing interface includes a first control, and the foregoing picture processing method may further include:
determining, in response to a triggering operation on the first control, to eliminate an element in the first image in a first elimination manner, where the first elimination manner is used for eliminating an element selected by the elimination operation; and
the eliminating the first element on the editing interface in response to the elimination operation on the first element in the first image includes:
   eliminating, on the editing interface and in response to the elimination operation on the first element in the first image, the first element selected by the elimination operation.

The first control may be a smart elimination control. The electronic device may determine, in response to a triggering operation by the user on the smart elimination control, to eliminate the first element in a smart elimination manner. In this way, after the electronic device detects the elimination operation on the first element, the electronic device may eliminate the entire first element.

Optionally, the editing interface may further include a second control, and the foregoing picture processing method may further include:
determining, in response to a triggering operation on the second control, to eliminate an element in the first image in a second elimination manner, where the second elimination manner is eliminating a partial region selected in an element targeted by the elimination operation; and
eliminating, on the editing interface and in response to an elimination operation on a second element in the first image, a region selected by the elimination operation in the second element.

The second element may be a residual part of the first element, or may be another element in the first image that is different from the first element. The second control may be a manual elimination control.

That is, after the electronic device eliminates the first element in the smart elimination manner in response to the user's operation, there may be a problem that the first element is not completely eliminated. In this case, the electronic device may continue to eliminate a residual part of the first element in a manual elimination manner in response to the user's operation.

Alternatively, after the electronic device eliminates the first element in the smart elimination manner, the electronic device may further eliminate a second element in the first picture that is different from the first element in the manual elimination manner.

Optionally, the editing interface includes a second control, and the foregoing picture processing method further includes:
determining, in response to a triggering operation on the second control, to eliminate the first element in the second elimination manner; and
the eliminating the first element on the editing interface in response to the elimination operation on the first element in the first image includes:
eliminating, on the editing interface and in response to the elimination operation on the first element in the first picture, a region selected by the elimination operation in the first element.

Optionally, the elimination operation includes a tap or slide operation, and the controlling, in response to detecting an elimination operation on a first element in the first image, to stop display of the stackable element on the editing interface includes:
controlling, in response to detecting a tap or slide operation on the first element, to stop display of the stackable element on the editing interface.

It may be understood as that, the electronic device detects a tap or slide operation on the first element, determines that the elimination operation starts, and controls, in response to the tap or slide operation, to stop display of the stackable element on the editing interface.

Optionally, after the eliminating the first element on the editing interface in response to the elimination operation on the first element in the first image, the foregoing picture processing method may further include:
determining a target color according to a color on the first image that is within a preset range at which the first element is located; and filling a position of the first element with the target color.

The position of the first element on the first image from which the first element has been eliminated on the editing interface is filled with the target color.

In this way, the electronic device fills, with the target color, the position of the first element after the first element is eliminated, so that the filled picture is more natural and realistic.

Optionally, the editing interface includes a save button, and after the displaying, on the editing interface, the first image from which the first element has been eliminated and the stackable element, the method further includes:
saving a second picture in response to detecting a triggering operation on the save button, where the second picture includes the first image from which the first element has been eliminated and the stackable element.

Therefore, after the electronic device eliminates the first element in the first image, the electronic device may save the second picture in response to the user's triggering operation on the save button on the editing interface, so that the picture after the elimination processing can be saved without page jumping, which reduces the user's operations and provides the user experience.

According to a second aspect, this application provides an electronic device, including: a display screen, where the display screen is configured to display an editing interface of a picture; one or more processors; and a memory, where the memory stores one or more computer programs, the one or more computer programs include instructions, and when the instructions are executed by the processor, the electronic device is enabled to perform the picture processing method according to any one of the first aspect.

According to a third aspect, this application provides a computer-readable storage medium. The computer-readable storage medium stores instructions. When the instructions are run on an electronic device, the electronic device is enabled to perform the picture processing method according to any one of the first aspect.

According to a fourth aspect, this application provides a computer program product. The computer program product includes computer instructions. When the computer instructions are run on an electronic device, the electronic device is enabled to perform the picture processing method according to any one of the first aspect.

It may be understood that the electronic device according to the second aspect, the computer storage medium according to the third aspect, and the computer program product according to the fourth aspect are all used to perform the corresponding method provided above. Therefore, for beneficial effect that can be achieved, refer to beneficial effect in the corresponding method provided above. Details are not described herein again.

### BRIEF DESCRIPTION OF DRAWINGS

FIG. 1A, FIG. 1B, FIG. 1C, FIG. 1D, FIG. 1E, and FIG. 1F are an example diagram 1 of picture processing in the related art;
FIG. 2A, FIG. 2B, FIG. 2C, and FIG. 2D are an example diagram 2 of picture processing in the related art;
FIG. 3A, FIG. 3B, FIG. 3C, FIG. 3D, FIG. 3E, and FIG. 3F are an example diagram 3 of picture processing in the related art;
FIG. 4 is an example diagram 4 of picture processing in the related art;
FIG. 5 is a schematic structural diagram of an electronic device according to an embodiment of this application;
FIG. 6 is a diagram of a software structure of an electronic device according to an embodiment of this application;
FIG. 7 is a schematic diagram of a logical layer according to an embodiment of this application;
FIG. 8 is a schematic diagram of a physical layer according to an embodiment of this application;
FIG. 9A, FIG. 9B, FIG. 9C, FIG. 9D, FIG. 9E, and FIG. 9F are an example diagram 1 of a picture processing method according to an embodiment of this application;
FIG. 10A, FIG. 10B, FIG. 10C, and FIG. 10D are an example diagram 2 of a picture processing method according to an embodiment of this application;
FIG. 11A, FIG. 11B, FIG. 11C, and FIG. 11D are an example diagram 3 of a picture processing method according to an embodiment of this application;
FIG. 12A, FIG. 12B, FIG. 12C, FIG. 12D, and FIG. 12E are an example diagram 4 of a picture processing method according to an embodiment of this application;
FIG. 13A, FIG. 13B, FIG. 13C, and FIG. 13D are an example diagram 5 of a picture processing method according to an embodiment of this application;
FIG. 14 is a flowchart of a picture processing method according to an embodiment of this application; and
FIG. 15 is a structural diagram of an electronic device according to an embodiment of this application.

### DESCRIPTION OF EMBODIMENTS

Technical solutions in embodiments of this application are described below with reference to the accompanying drawings in the embodiments of this application. In the descriptions of embodiments of this application, unless otherwise specified, "/" represents "or". For example, A/B may represent A or B. In this specification, "and/or" is merely an association relationship for describing associated objects, and indicates that three relationships may exist. For example, A and/or B may indicate the following three cases: Only A exists, both A and B exist, and only B exists.

The terms "first" and "second" mentioned below are used merely for the purpose of description, and shall not be construed as indicating or implying relative importance or implying a quantity of indicated technical features. Therefore, a feature limited by "first" or "second" may explicitly or implicitly include one or more of the features. In the descriptions of the embodiments of this application, unless otherwise specified, "a plurality of" means two or more.

In this embodiment of this application, words such as "exemplary" or "for example" are used for representing giving an example, an illustration, or a description. Any embodiment or design scheme described as "exemplary" or "for example" in the embodiments of this application should not be explained as being more preferable or having more advantages than other embodiments or design schemes. Exactly, the terms such as "exemplary" or "for example" are intended to present related concepts in a specific manner.

In the related art, electronic devices are provided with applications (APPs) for performing editing processing on pictures, such as gallery APPs and third-party picture editing APPs. An electronic device may perform editing processing on a picture in response to a user's operation, where the editing process includes, but not limited to, cropping, adjusting filters, beauty, labeling, doodling, mosaic, eliminating, and the like.

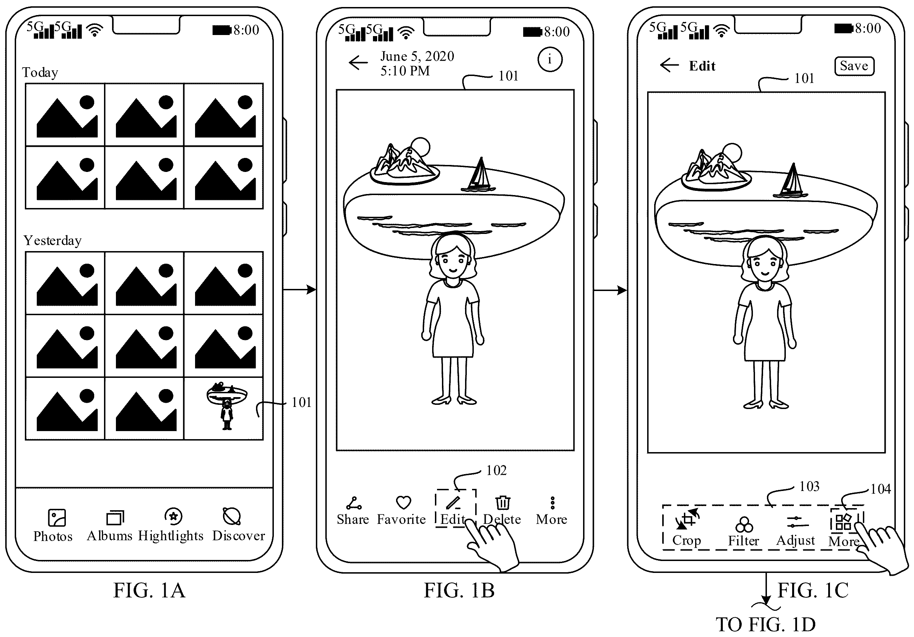

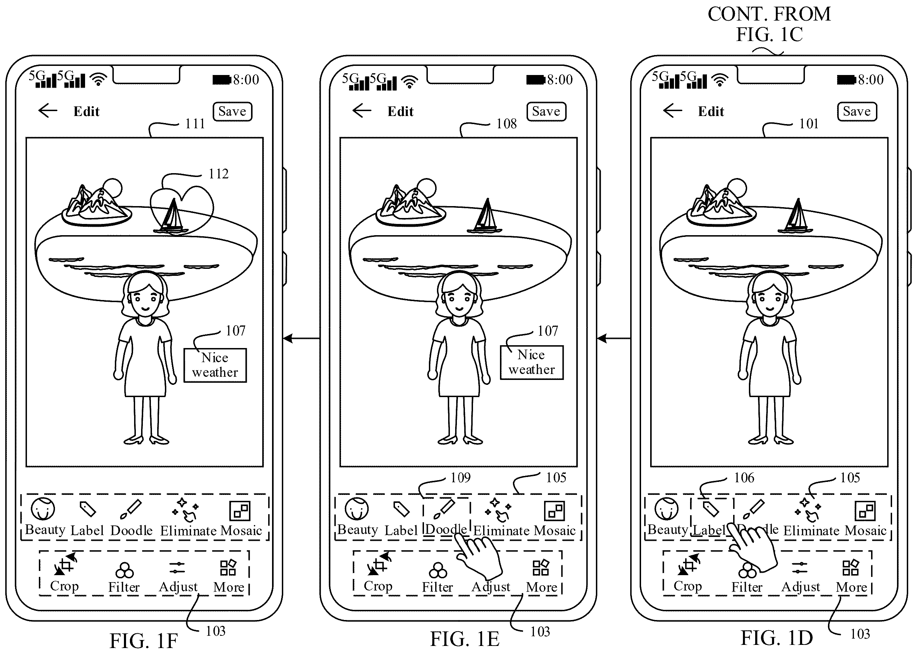

For example, FIG. 1A, FIG. 1B, FIG. 1C, FIG. 1D, FIG. 1E, and FIG. 1F are an example diagram 1 of picture processing in the related art. An example in which the electronic device is a mobile phone and the App for performing editing processing on pictures is a gallery APP is used for describing a picture processing process in an exemplary manner.

As shown in an interface in FIG. 1A, the gallery APP of the mobile phone may include one or more pictures. After the mobile phone receives the user's operation of selecting a picture in the gallery APP, for example, a picture 101, a display interface of the mobile phone switches from FIG. 1A to FIG. 1B.

As shown in the interface in FIG. 1B, the interface displayed on the mobile phone includes the picture 101, a share icon, a favorite icon, an edit icon 102, a delete icon, and a more icon. When the mobile phone detects a triggering operation on a certain icon by the user, the mobile phone may perform a corresponding operation on the picture 101. For example, when the mobile phone detects a triggering operation on the edit icon 102 by the user, the display interface of the mobile phone switches from FIG. 1B to FIG. 1C.

As shown in the interface in FIG. 1C, the interface displayed on the mobile phone includes a picture 101 and a first-level toolbar 103. The first-level toolbar 103 may include a crop icon, a filter icon, an adjust icon, and a more icon 104. When the mobile phone detects a triggering operation on a certain icon by the user, the mobile phone may perform corresponding processing on the picture 101. For example, when the mobile phone detects a triggering operation on the more icon 104 by the user, the display interface of the mobile phone switches from FIG. 1C to FIG. 1D.

As shown in the interface in FIG. 1D, the interface displayed on the mobile phone includes a picture 101, a first-level toolbar 103, and a second-level toolbar 105. As shown in FIG. 1D, the second-level toolbar 105 may include a beauty icon, a label icon 106, a doodle icon, an eliminate icon, and a mosaic icon.

In some embodiments, the second-level toolbar 105 may further include a watermark icon, a photo frame icon, a blur icon, a splash icon, a sticker icon, and the like.

It may be understood that, in a case that a screen size of the mobile phone is limited, the content of the second-level toolbar 105 may be incapable of being fully displayed. When the mobile phone receives a slide operation on the second-level toolbar 105 by the user, the second-level toolbar 105 may display hidden content. For example, on the mobile phone interface, the content displayed on the second-level toolbar 105 includes a beauty icon, a label icon, a doodle icon, an eliminate icon, and a mosaic icon, and the hidden content includes a watermark icon, a photo frame icon, a blur icon, a splash icon, and a sticker icon. In response to an operation of sliding the second-level toolbar by the user, the second-level toolbar on the mobile phone interface may display the hidden content.

When the mobile phone detects a triggering operation on the label icon 106 by the user, the display interface of the mobile phone displays a text input interface (not shown in FIG. 1A, FIG. 1B, FIG. 1C, FIG. 1D, FIG. 1E, and FIG. 1F), and the user may enter text, for example, enter "Nice weather", on the text input interface. After the mobile phone detects an operation of confirming the entered text by the user, the mobile phone displays an interface shown in FIG. 1E. As shown in the interface in FIG. 1E, the interface displayed on the mobile phone is still a second-level page, and the second-level page includes a picture 108, "Nice weather" 107, a first-level toolbar 103, and a second-level toolbar 105.

After adding text to the picture, the mobile phone may further perform other processing on the picture. For example, the mobile phone may doodle on the picture 108 in response to the user's doodle operation. For example, as shown in FIG. 1E, after the mobile phone detects the user's triggering operation on a doodle icon 109, the user may perform a doodle operation on the display screen of the mobile phone. After the mobile phone detects that the user confirms the doodle operation, the doodle added by the user may be retained in the picture displayed on the mobile phone. As shown in FIG. 1F, the second-level page displayed on the mobile phone includes a picture 111, a doodle 112, "Nice weather 107", a first-level toolbar 103, and a second-level toolbar.

In some embodiments, when the user performs a doodle operation on the picture, a doodle function bar (not shown in FIG. 1A, FIG. 1B, FIG. 1C, FIG. 1D, FIG. 1E, and FIG. 1F) may be displayed on the display interface of the mobile phone. The doodle toolbar may include a pen shape function, a color function, a thickness function, an eraser function, and the like. The mobile phone may select a pen shape of the doodle in the pen shape function in the doodle toolbar in response to the user's selection operation; the mobile phone may select a color of the doodle in the color function in the doodle function bar in response to the user's selection operation; the mobile phone may also determine a thickness of lines used for the doodle in the thickness function in the doodle function bar in response to the user's selection operation; and the mobile phone may also erase the doodle through the eraser function in the doodle function bar in response to the user's operation.

FIG. 1A, FIG. 1B, FIG. 1C, FIG. 1D, FIG. 1E, and FIG. 1F describe that the mobile phone performs a text adding operation and a doodle operation on the picture, to obtain a picture 111 including the doodle and the text. The mobile phone may perform elimination processing on an object in the picture 111.

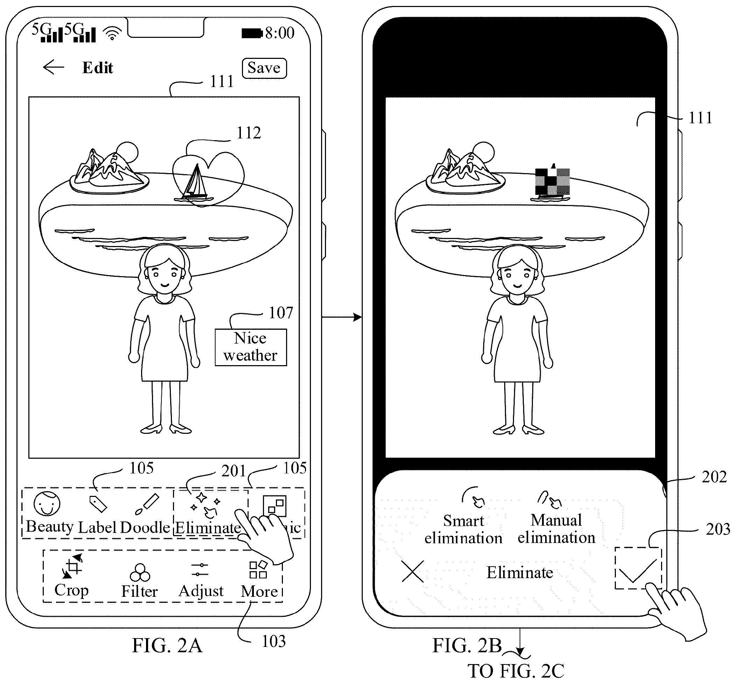

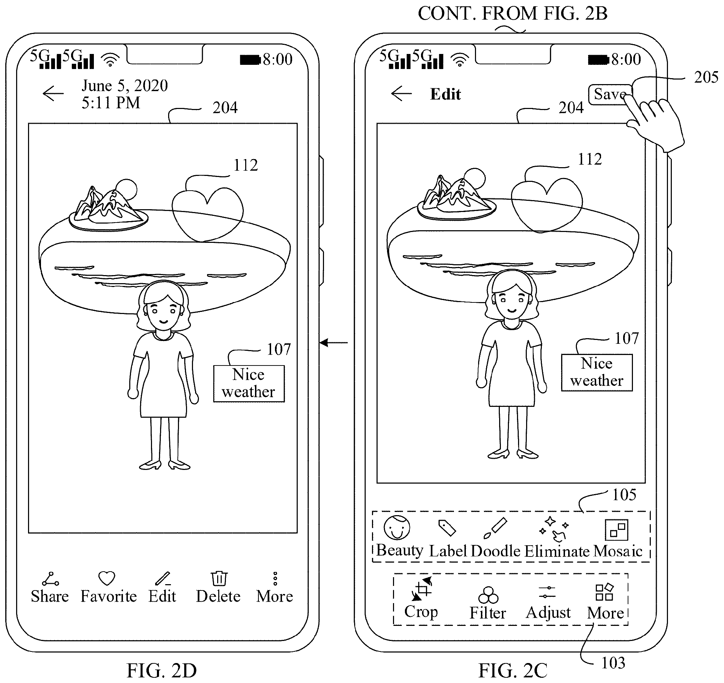

FIG. 2A, FIG. 2B, FIG. 2C, and FIG. 2D are an example diagram 2 of picture processing in the related art. As shown in an interface in FIG. 2A, the interface displayed on the mobile phone includes a picture 111, a doodle 112, "Nice weather 107", a first-level toolbar 103, and a second-level toolbar 105. For example, when the mobile phone detects the user's triggering operation on an eliminate icon 201, the display interface of the mobile phone switches from FIG. 2A to FIG. 2B.

As shown in the interface in FIG. 2B, the interface displayed on the mobile phone includes a picture 111 and an elimination toolbar 202 (that is, a third-level toolbar). The elimination toolbar includes a smart elimination control, a manual elimination control, an elimination cancel icon, and an elimination confirmation icon. The user may choose to perform a smart elimination operation or a manual elimination operation on the picture 111 in the elimination toolbar. For example, after the mobile phone detects that the user selects the manual elimination control, and after the mobile phone detects an elimination operation on a boat on the picture 111 by the user, when the mobile phone detects that the user triggers an elimination confirmation icon 203, the display interface of the mobile phone switches from FIG. 2B to FIG. 2C.

As can be seen from FIG. 2B, in the process in which the user performs elimination on the picture 111, the doodle 112 and the "Nice weather" 107 are not displayed on the display interface of the mobile phone. That is, in the process in which the mobile phone performs an elimination operation, no stacking element is displayed on the picture 111.

As shown in the interface in FIG. 2C, the interface displayed on the mobile phone includes a picture 204 (that is, a picture on which the elimination operation has been performed), a first-level toolbar 103, a second-level toolbar 105, and a save button 205. When the mobile phone detects a triggering operation on the save button 205 by the user, the mobile phone performs an operation of saving the picture 204, and the display interface of the mobile phone switches from FIG. 2C to FIG. 2D. As shown in FIG. 2D, the display interface of the mobile phone includes a picture 204, a share icon, a favorite icon, an edit icon, a delete icon, and a more icon.

As can be seen from FIG. 2A, FIG. 2B, FIG. 2C, and FIG. 2D, in the process in which the mobile phone performs elimination on the picture, no stacking element is displayed on the display interface of the mobile phone. When the mobile phone saves the picture 204 after the elimination, the stacking element is redisplayed on the display interface of the mobile phone. In addition, on an interface of the third-level toolbar of the elimination function, after performing an elimination operation on the picture, the user needs to first tap a "Confirm" icon, return to the interface of the second-level toolbar, and tap the "Save" button on the interface of the second-level toolbar, to save and export the processed picture. It can be seen that after the mobile phone eliminates certain objects in the picture, a plurality of operations are required to save the picture after the elimination processing.

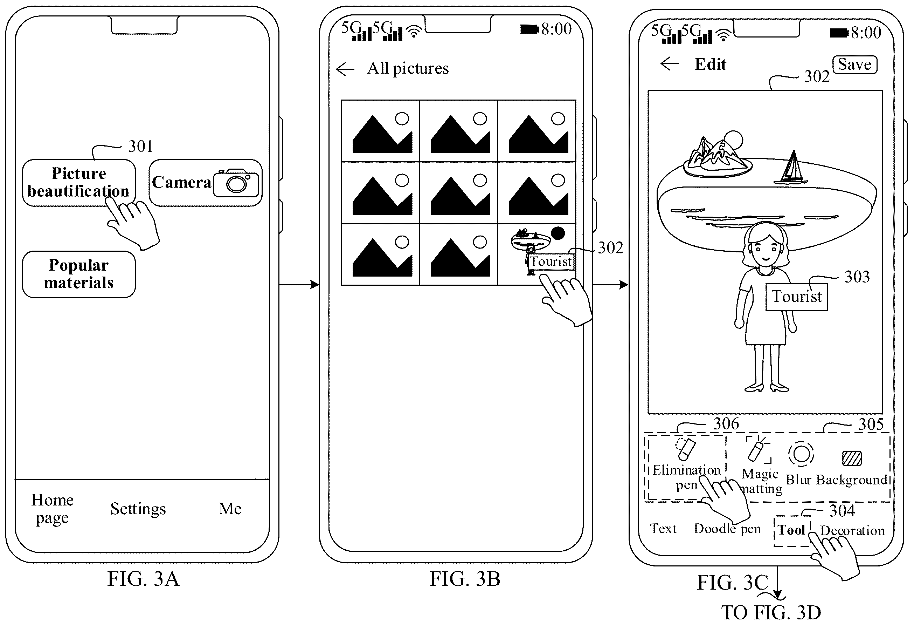

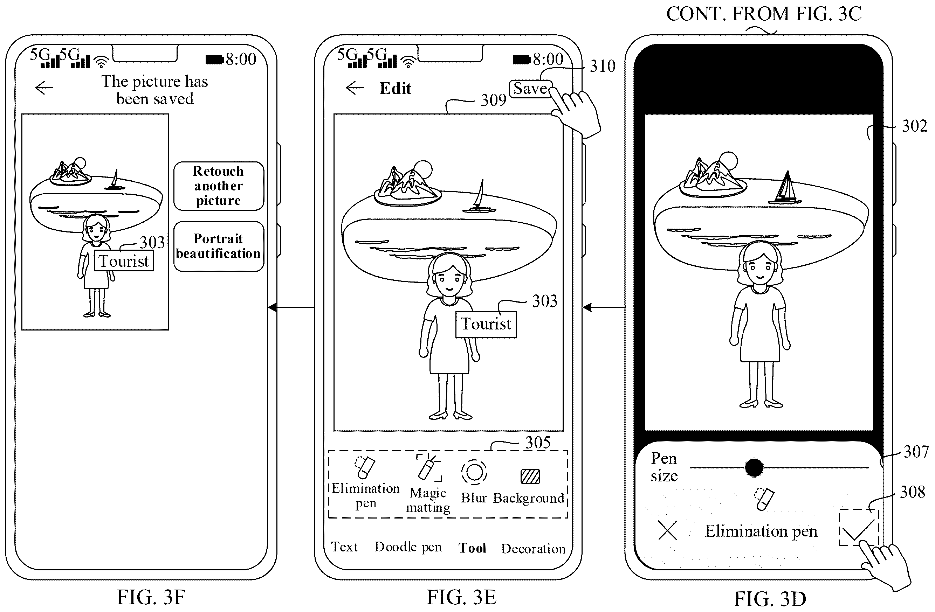

Similarly, after the user uses a third-party application in the mobile phone to perform elimination processing on certain elements in a picture, the user needs to perform a plurality of operations before the mobile phone can successfully save the picture after the elimination processing. An exemplary description is provided below with reference to FIG. 3A, FIG. 3B, FIG. 3C, FIG. 3D, FIG. 3E, and FIG. 3F.

FIG. 3A, FIG. 3B, FIG. 3C, FIG. 3D, FIG. 3E, and FIG. 3F are an example diagram 3 of picture processing in the related art. An interface shown in FIG. 3A is a home page of a third-party application for processing pictures. When the mobile phone detects a triggering operation on a picture beautification icon 301 by the user, the display interface of the mobile phone switches from FIG. 3A to FIG. 3B.

As shown in the interface in FIG. 3B, the gallery of the mobile phone may include one or more pictures. After the mobile phone receives the user's operation of selecting a picture in the gallery, for example, a picture 302, the display interface of the mobile phone switches from FIG. 3B to FIG. 3C.

As shown in the interface in FIG. 3C, the mobile phone's display interface includes a picture 302 and a first-level toolbar. The first-level toolbar may include a text icon, a doodle pen icon, a tool icon 304, and a decoration icon. When the mobile phone detects a triggering operation on the tool icon 304 by the user, a second-level toolbar 305 may be displayed on the display interface of the mobile phone. The second-level toolbar 305 may include: an elimination pen icon 306, a magic matting icon, a blur icon, a background icon, and the like. When the mobile phone detects a triggering operation on the elimination pen icon 306 by the user, the display interface of the mobile phone switches from FIG. 3C to FIG. 3D.

It may be understood that, in a case that a screen size of the mobile phone is limited, the content of the second-level toolbar 305 may be incapable of being fully displayed. When the mobile phone receives a slide operation on the second-level toolbar 305 by the user, the second-level toolbar 105 may display hidden content. For example, on a mobile phone interface, the content displayed in the second-level toolbar 305 includes a beauty icon, a label icon, a mosaic icon, and the like.

As shown in the interface in FIG. 3D, the mobile phone's display interface includes a picture 302 and an elimination pen toolbar 307. The user may select a size of a pen tip for performing elimination on the picture in the elimination pen toolbar 307. After the mobile phone detects an elimination operation on a boat in the picture 302 by the user, and when the mobile phone detects that the user triggers an elimination confirmation icon 308, the display interface of the mobile phone switches from FIG. 3D to FIG. 3E.

As can be seen from FIG. 3D, in the process in which the user performs elimination on the picture 302, no "tourist" 303 is displayed on the display interface of the mobile phone. That is, in the process in which the mobile phone performs an elimination operation, no stacking element is displayed on the picture 302.

As shown in the interface in FIG. 3E, the interface displayed on the mobile phone includes a picture 309, a first-level toolbar, a second-level toolbar 305, and a save button 310. The picture 309 is a picture obtained after an elimination operation is performed on the picture 302. When the mobile phone detects a triggering operation on the save button 310 by the user, the mobile phone performs an operation of saving the picture 309, and the display interface of the mobile phone switches from FIG. 3E to FIG. 3F.

In an embodiment, when the gallery APP or a third-party application in the mobile phone performs an elimination operation, there may be a problem that a stacking element in the picture is not hidden, causing the stacking element to be eliminated.

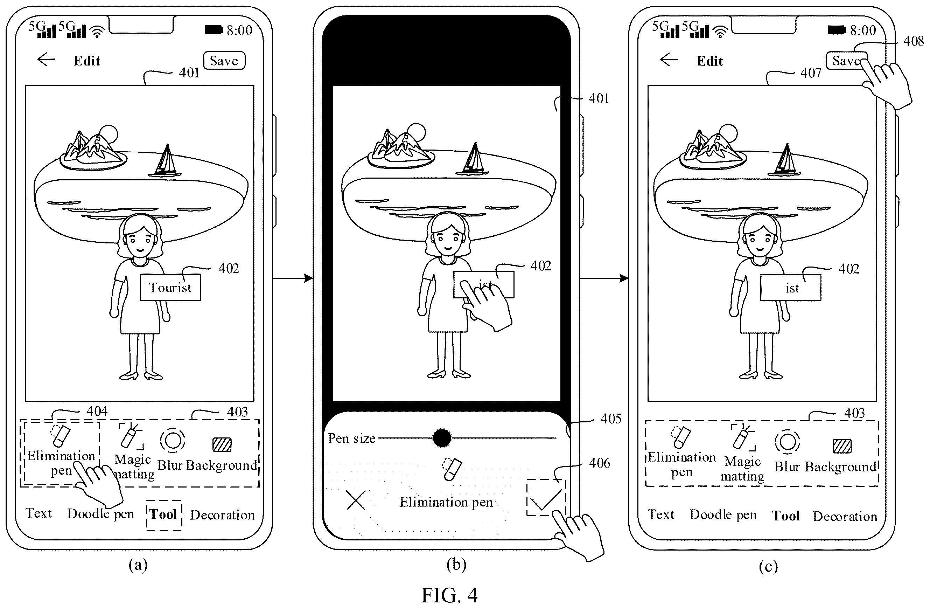

For example, FIG. 4 is an example diagram 4 of picture processing in the related art. As shown in an interface in (a) of FIG. 4, the mobile phone's display interface includes a picture 401, a first-level toolbar, and a second-level toolbar 403. The picture 401 includes a stacking element 402. After the mobile phone detects a triggering operation on an elimination pen icon 404 in the second-level toolbar 403 by the user, the display interface of the mobile phone switches from (a) of FIG. 4 to (b) of FIG. 4.

As shown in the interface in (b) of FIG. 4, the mobile phone's display interface includes a picture 401 and an elimination pen toolbar 405. The picture 401 includes text in the stacking element. When the mobile phone detects an elimination operation on the picture 401 by the user, the stacking element in the picture 401 is not hidden. That is, the stacking element in the picture does not disappear in the process in which the mobile phone performs elimination. When the mobile phone detects that the user triggers an elimination confirmation icon 406, the mobile phone's display interface switches from (b) of FIG. 4 to (c) of FIG. 4.

As shown in the interface in (c) of FIG. 4, the mobile phone's display interface includes a picture 407 (that is, a picture after the elimination processing) and a save button 408. When the mobile phone detects a triggering operation on the save button 408 by the user, the mobile phone performs an operation of saving the picture 407.

As can be seen from FIG. 4, in the process in which the mobile phone performs elimination on the picture, a stacking element is displayed on the display interface of the mobile phone. When the mobile phone saves the picture after the elimination processing, the mobile phone returns to the interface of the second-level toolbar and the "Save" button on the interface of the second-level toolbar is tapped to save and export the processed picture. It can be seen that when the mobile phone eliminates certain objects in the picture, there is a problem that the stacking element blocks the picture. During saving of the picture after the elimination, a plurality of operations are required to save the picture after the elimination processing.

In some embodiments, when the gallery APP or a third-party application in the mobile phone executes an elimination function, there may be a problem that a stacking element in the picture is not hidden, and the stacking element covers objects to be eliminated, resulting in that the user cannot accurately eliminate certain elements in the picture.

As shown in (a) of FIG. 4, assuming that the user intends to eliminate a region covered by a "tourist" 402 in the picture 401, when the mobile phone detects a triggering operation on an elimination pen 404 by the user, the "tourist" 402 is still displayed on the interface of the mobile phone. Therefore, because the stacking element "tourist" 402 covers the region ofthe object to be eliminated, the user cannot accurately eliminate a partial region in the picture 401.

Accordingly, the embodiments of this application provide a picture processing method, applied to an electronic device. In the method, in a process in which the electronic device displays an editing interface of a first picture, the electronic device controls, in response to detecting an elimination operation on a first element in a first image, to stop display of a stackable element on the editing interface; eliminates the first element in response to the elimination operation on the first element in the first picture; and displays, on the editing interface and in response to completion of the elimination operation, the first image from which the first element has been eliminated and the stackable element. Therefore, after the electronic device eliminates an element in a first picture on an editing interface of the first picture, the picture after the elimination processing is directly displayed on the editing interface. Not only operations in the entire elimination process are simple, but also the elimination effect can be intuitively seen. In addition, when it is detected that the elimination operation on the first element in the first image starts, the stackable element is controlled to stop from being displayed, thereby avoiding the problem that the stackable element blocks elements in the first picture, resulting in the incapability to accurately perform elimination processing on the elements in the first picture. For example, the picture processing method provided in the embodiments of this application may be applicable to electronic devices with a display screen, such as a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, an in-vehicle device, a smart car, a smart speaker, or the like. This is not limited in the embodiments of this application.

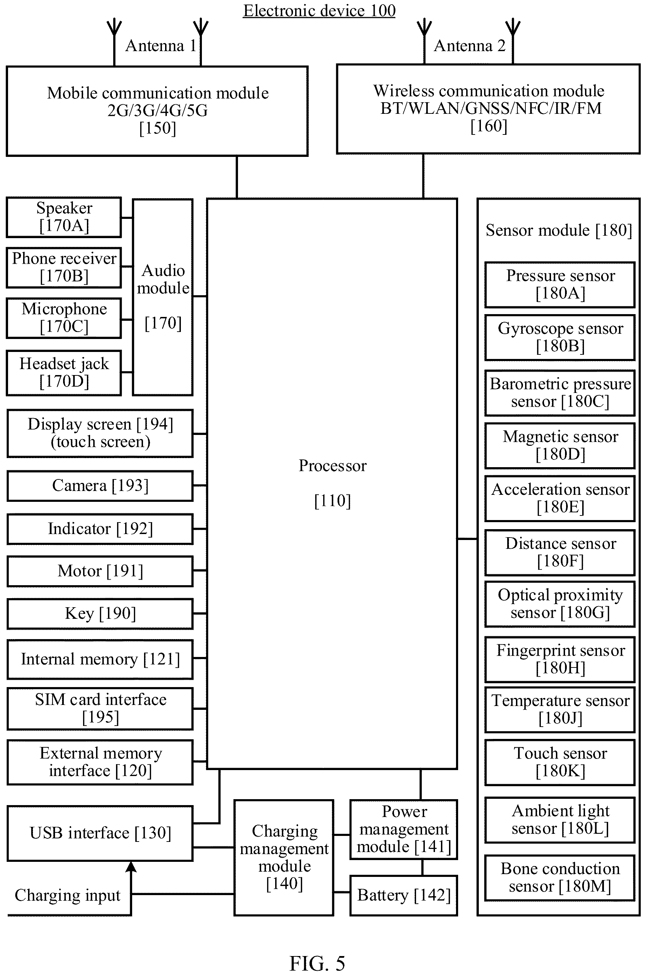

As shown in FIG. 5, FIG. 5 is a schematic structural diagram of an electronic device according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, and an audio module 170, a speaker 170A, a phone receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that, Schematic structures in embodiments of this application do not constitute specific limitations to the electronic device 100. In some other embodiments of this application, the electronic device 100 may include more or fewer components than those shown in the figure, or some components may be combined, or some components may be split, or a different component arrangement may be used. The components in the portrait may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated into one or more processors.

The controller may be a nerve center and command center of the electronic device 100. The controller may generate an operation control signal according to instruction operation code and a time-sequence signal, and control obtaining and executing of instructions.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instruction or the data again, the processor may directly invoke the instructions or the data from the memory, to avoid repeated access and reduce a waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between the modules illustrated in this embodiment of this application is merely a schematic description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The wireless communication function of the electronic device 100 can be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication frequency bands. Different antennas may be multiplexed to improve antenna utilization. For example, the antenna 1 may be multiplexed into a diversity antenna of a wireless local area network. In some other embodiments, the antennas may be used with a tuning switch.

The mobile communication module 150 may provide a solution to wireless communication such as 2G/3G/4G/5G applied to the electronic device 100. The mobile communications module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in the same device.

The wireless communication module 160 may provide a solution that is applied to the electronic device 100 and that is used for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices that integrate at least one communication processing module. The wireless communication module 160 receives an electromagnetic wave by using the antenna 2, performs frequency modulation on and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave by using the antenna 2 for radiation.

In some embodiments, the antenna 1 and the mobile communication module 150 of the electronic device 100 are coupled, and the antenna 2 and the wireless communication module 160 are coupled, so that the electronic device 100 can communicate with a network and another device by using a wireless communications technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and is configured to render an image. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include one or N display screens 194, and N is a positive integer greater than 1.

The electronic device 100 may implement a photographing function by using the ISP, the camera 193, the video codec, the GPU, the display screen 194, the application processor, and the like.

The external memory interface 120 may be configured to connect to an external storage card such as a micro SD card, to expand a storage capability of the electronic device 100. The external storage card communicates with the processor 110 by using the external memory interface 120, to implement a data storage function. For example, a file such as a music or a video is stored in the external storage card.

The internal memory 121 may be configured to store computer executable program code, where the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (such as a voice playing function and an image playing function), and the like. The data storage area may store data (for example, audio data and an address book) and the like created when the electronic device 100 is used. In addition, the internal memory 121 may include a high-speed random access memory, and may also include a non-volatile memory, for example, at least one magnetic disk storage device, a flash memory device, or a universal flash storage (universal flash storage, UFS).

The electronic device 100 may implement an audio function, for example, music playing and recording, by using the audio module 170, the speaker 170A, the phone receiver 170B, the microphone 170C, the headset jack 170D, the application processor, and the like. The audio function is, for example, music playback and sound recording.

The audio module 170 is configured to convert digital audio information into analog audio signal output, and is also configured to convert analog audio input into a digital audio signal. The audio module 170 may further be configured to encode and decode audio signals. In some embodiments, the audio module 170 may be disposed in the processor 110, or some functional modules of the audio module 170 are disposed in the processor 110.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces. N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 may also be compatible with an external storage card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device may use a hierarchical architecture, an event-driven architecture, a microkernel architecture, a microservice architecture, or a cloud architecture. In the embodiments of the present disclosure, an Android system with a layered architecture is used as an example to describe a software structure of the electronic device.

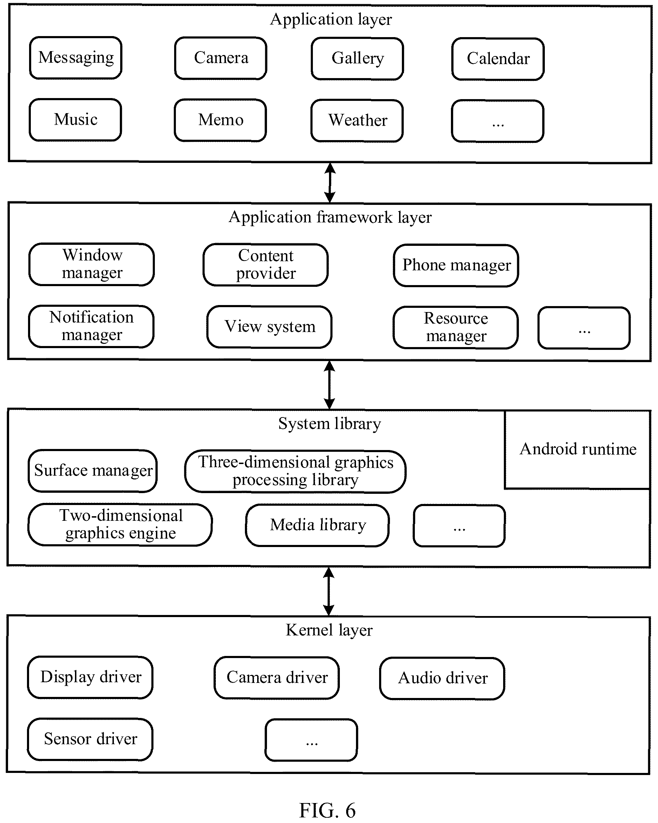

FIG. 6 is a diagram of a software structure of an electronic device according to an embodiment of this application.

It may be understood that, In the layered architecture, the software is divided into several layers, and each layer has a clear role and task. The layers communicate with each other by using a software interface. In some embodiments, the Android system may include an application layer (referred to as an application layer for short), an application framework layer (referred to as framework layer for short), a system library, and a kernel layer.

The application layer may include a series of application packages.

As shown in FIG. 6, the application packages include system applications. The system applications refer to applications that are set in the electronic device before the electronic device is delivered from the factory. For example, the system applications may include programs such as Camera, Gallery, Calendar, Music, Messaging, Memo, and Weather. The Gallery includes at least one picture.

The application packages may further include third-party applications, and the third-party applications refer to applications installed by the user after downloading installation packages from an application store (or an application market), for example, a map application, a take-out application, a reading application (for example, an E-book), a social application, and a travel application.

The foregoing application framework layer provides an application programming interface (application programming interface, API) and a programming framework for applications at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window application. The window manager may acquire a size of a display screen, determine whether there is a status bar, lock a screen, capture a screen, and the like.

The content provider is configured to store and acquire data and make the data accessible to an application. The data may include a video, an image, an audio, phone calls made and answered, a browsing history, favorites, a phone book, and the like.

The view system includes a visual control such as a control for text display or a control for picture display. The phone manager is configured to provide a communication function for the electronic device, for example, call status management (including connecting, hanging-up, and the like).

The resource manager provides various resources such as a localized character string, an icon, a picture, a layout file, and a video file for an application.

The notification manager enables an application to display notification information on a status bar. The notification information may be a message used to indicate a notification type, and may automatically disappear after a short stay without interacting with a user. For example, the notification manager is configured to notify download completion, a message prompt, and the like. The notification manager may alternatively be a notification that appears on a top status bar of the system in the form of a graph or a scroll bar text, for example, a notification of an application running on the background, or may be a notification that appears on the screen in the form of a dialog window. For example, text information is prompted in the status bar, an alert sound is given, the mobile phone vibrates, and an indicator blinks.

The Android Runtime includes a core library and a virtual machine. The Android Runtime is responsible for scheduling and management of the Android system.

The core library includes two parts: one part is a performance function that the Java language needs to invoke, and the other part is a core library of Android.

The application layer and the application framework layer are run in the virtual machine. The virtual machine executes java files of the application layer and the application framework layer as binary files. The virtual machine is configured to execute functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), a two-dimensional graphics engine (for example, SGL), and the like.

The surface manager is configured to manage a display subsystem, and provide fusion of two-dimensional and three-dimensional layers to a plurality of applications.

The media library supports playback and recording in a plurality of commonly used audio and video formats, static image files, and the like. The media library may support a plurality of audio and video encoding formats such as MPEG 4, H.264, MP3, AAC, AMR, JPG, and PNG.

The three-dimensional graphics processing library is configured to implement three-dimensional graphics drawing, image rendering, synthesis, layer processing, and the like.

The two-dimensional graphics engine is a drawing engine for two-dimensional drawings.

The kernel layer is a layer between hardware and software. The core layer includes at least a display driver, a camera driver, an audio driver, and a sensor driver.

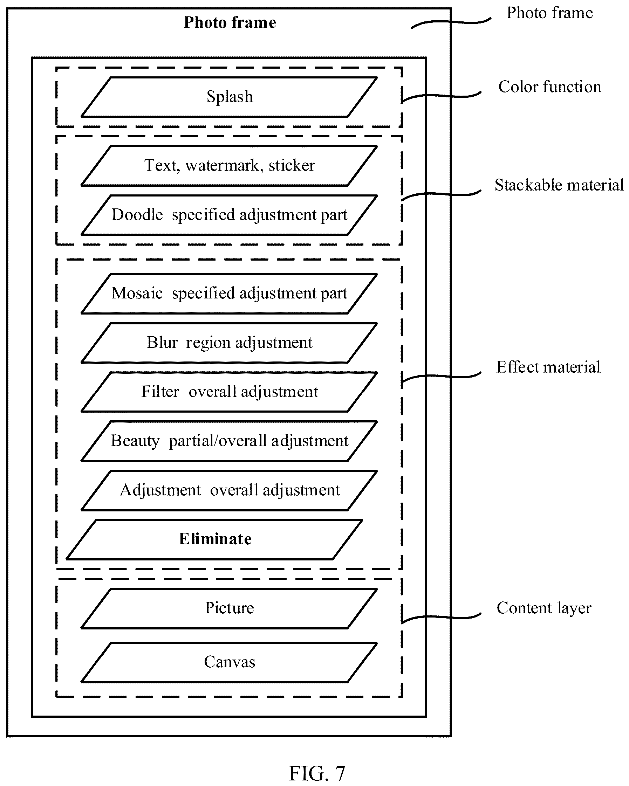

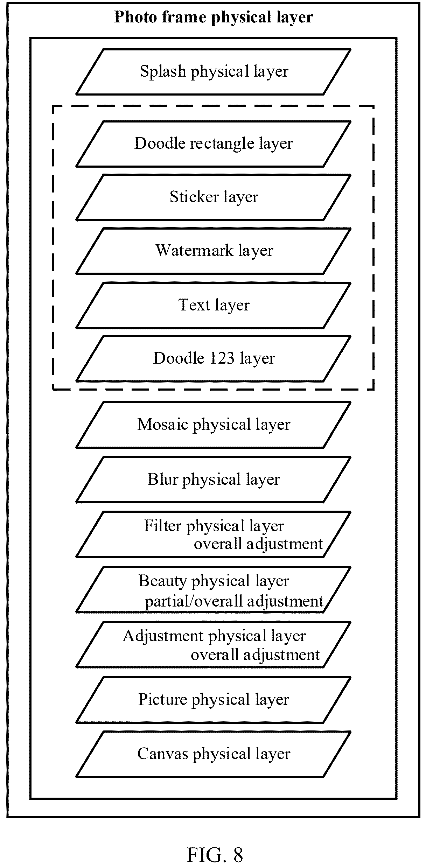

An example in which a gallery application implements the picture processing method in the embodiments of this application is used. Pictures in the gallery application may be divided into a logical layer as described in FIG. 7 and a physical layer as described in FIG. 8 according to different processing functions.

For example, FIG. 7 is a schematic diagram of a logical layer according to an embodiment of this application.

As shown in FIG. 7, the logical layer, from top to bottom, may include a photo frame, a color function, a stackable material, an effect material, and a content layer.

The photo frame is displayed independently on the periphery of the screen, so that the photo frame can be unaffected by other materials or functions. For example, the mobile phone sequentially receives the user's operation of adding a photo frame to a picture and the user's operation of adding a filter to the picture. The color of the photo frame is not affected by the filter and does not change.

The color function may include splash, and the color function acts on all colored content in pictures.

The stackable material may include at least one of text, watermark, sticker, or doodle, and the stackable material acts on a part of the picture.

The effect material may include at least one of mosaic, blur, filter, beauty, adjust, or eliminate. The adjustment function acts on a picture or a video. For example, the user may adjust a brightness, a saturation, and the like of the picture through the adjustment function. In addition to the adjustment function, among other effect materials, an upper-layer material may affect a lower-layer material. For example, the mobile phone receives a user's operation of adding a mosaic to a picture to which a filter has been added, and the mosaic acts on the picture to which a filter has been added.

The content layer may include a picture and a canvas. The picture refers to a picture used for picture processing.

In the logical layer shown in FIG. 7, an upper-layer material or function will affect a lower-layer material or function, and the lower-layer material or function will not affect the upper-layer material or function. In this way, no matter how the user's operation order changes, consistent picture processing results can be obtained. Filter and adjust are used as an example. The mobile phone sequentially receives: the user's operation of adding a filter to a picture, and the user's operation of adjusting the picture by using the adjustment function. Because the adjustment function targets the picture layer in the logical layer, rather than the picture to which a filter has been added, the foregoing picture processing result is consistent with the effect of adjusting the picture by using the adjustment function and then adding a filter by the user.

As shown in FIG. 7, based on actual needs of users, a cropping function is placed at a lower layer of text, watermark, and sticker, and the crop function is placed at an upper layer of doodle. When the mobile phone receives the user's cropping operation to crop a picture, cropping can act on the doodle layer, the effect material, and the content layer at lower layers of cropping, but cannot act on the text layer, the watermark layer, and the sticker layer, the color function, and the photo frame at upper layers of cropping.

That is, on the one hand, considering that the doodle and the mosaic added by the user to the picture may be strongly related to the content of the picture, for example, in a case that the user adds a doodle to the picture or circles a word in the picture, the user does not intend that the relative positions of the doodle and the picture change in the cropping process, or in a case that the user adds a mosaic to the picture to cover a human face in the picture, the user does not intend that the relative positions of the mosaic and the picture change in the cropping process, so that the doodle and the mosaic are placed at lower layers of cropping, so that the doodle and the mosaic can always be displayed on the picture in the cropping process, and the relative positions thereof with the picture remain unchanged. The user can see the doodle and the mosaic intuitively, and the mosaic and the doodle are cropped according to the user's actual needs.

On the other hand, considering that the user does not intend to partially or completely crop text, a watermark, and/or a sticker added to the picture in the cropping process, text, watermark, and sticker are placed at upper layers of cropping, so that the text, the watermark, and the sticker can be temporarily not displayed in the cropping process. After the cropping is completed, the text, the watermark, and the sticker can be redisplayed on the cropped picture, and the cropping function does not act on the text, the watermark, and the sticker.

It may be understood that, there is no coupling relationship between the layers, and the content included in the layers may be adjusted according to actual needs. For example, in a case that the user adds text to a picture and uses text to label names of items in the picture, the user's need is that the relative positions of the text and the picture remain unchanged in the cropping process. To meet the user's need, text may be moved to a lower layer of cropping. This is not specifically limited in the embodiments of this application.

For example, FIG. 8 is a schematic diagram of a physical layer according to an embodiment of this application. The physical layer is an actual layer order corresponding to picture processing functions in the picture processing process.

Corresponding to the picture processing process of FIG. 1A, FIG. 1B, FIG. 1C, FIG. 1D, FIG. 1E, and FIG. 1F to FIG. 4, the order of the physical layer from top to bottom may include: a photo frame physical layer, a splash physical layer, a stackable material physical layer, a mosaic physical layer, a blur physical layer, a filter physical layer, a beauty physical layer, an adjustment physical layer, a picture physical layer, and a canvas physical layer.

The stackable material may include at least one of sticker, watermark text, or doodle. Corresponding to the picture editing process of FIG. 1A, FIG. 1B, FIG. 1C, FIG. 1D, FIG. 1E, and FIG. 1F to FIG. 4, the stackable material physical layer may include a doodle rectangle layer, a sticker layer, a watermark layer, a text layer, and a doodle 123 layer from top to bottom.

The order of the physical layers above may be relatively fixed. One or more real layers may be added to each physical layer.

For example, the mosaic physical layer is used as an example. The mobile phone adds a first mosaic to the picture in response to the user's operation, then a first real mosaic layer will be added to the mosaic physical layer. Afterwards, the mobile phone adds text to the picture in response to the user's operation, then a real text layer may be added to the text physical layer. After adding the text, the user returns to the mosaic function. Further, the mobile phone adds a second mosaic to the picture in response to the user's operation, then a second real mosaic layer will be added to the mosaic physical layer. That is, the first mosaic and the second mosaic are at the mosaic physical layer.

Similarly, for text, a doodle, a watermark, and a sticker added to a picture by an electronic device, at the stackable element physical layer, a new layer may be created for each element according to an adding order of the user. For example, the mobile phone adds a first doodle to the picture in response to the user's operation, then a first real doodle layer may be added to the stackable material physical layer. Afterwards, the mobile phone adds text to the picture in response to the user's operation, then a real text layer may be added to the stackable material physical layer. After adding the text, the user returns to the doodle function. Further, the mobile phone adds a second doodle to the picture in response to the user's operation, then a second real doodle layer may be added to the stackable material physical layer. That is, the first doodle layer, the text layer, and the second doodle layer may be located at the stackable material physical layer in order from bottom to top.

It may be understood that, for the first doodle, no matter how much doodle content are included in the first doodle, a real doodle layer may be created for the first doodle. For example, the content of the first doodle is "123". Although "1", "2", and "3" correspond to three different strokes, at the doodle physical layer, "123" corresponds to one real layer, rather than three real layers. The second doodle is processed similarly, and details are not described herein again.

For a picture including a plurality of layers, for example, the picture 111 shown in FIG. 1F includes a canvas, a picture, a doodle 112, and text 107. In response to an operation of tapping on the doodle 112 by the user, the mobile phone may select the doodle 112 at the doodle layer.

Based on the logical layer and the physical layer, in the embodiments of this application, elements at each logical layer or physical layer may be processed in a distinguished manner, so that during elimination of certain elements in the picture, some elements can be displayed and some elements can be hidden. After the elimination action is completed, the elements that are not displayed can be redisplayed on the picture after the elimination, thereby resolving the problem that the stacking element covers elements to be eliminated on the picture, resulting in that the user cannot accurately eliminate certain elements in the picture. The specific solution will be described in detail in subsequent embodiments, and details are not described herein again.

An example in which the electronic device 100 is a mobile phone and the App for editing pictures is a gallery APP is used for describing the picture processing method in this application with reference to the accompanying drawings below in an exemplary manner.

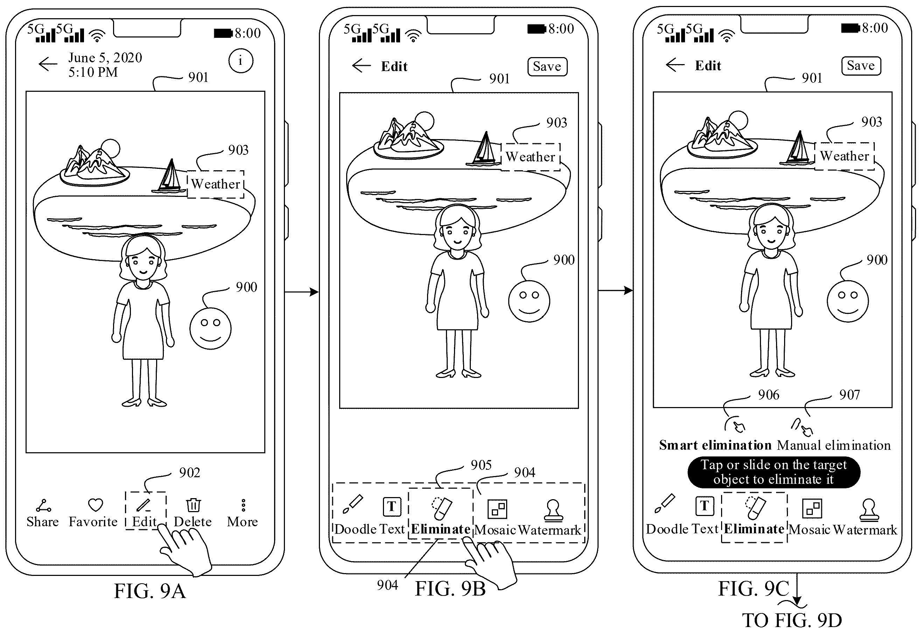

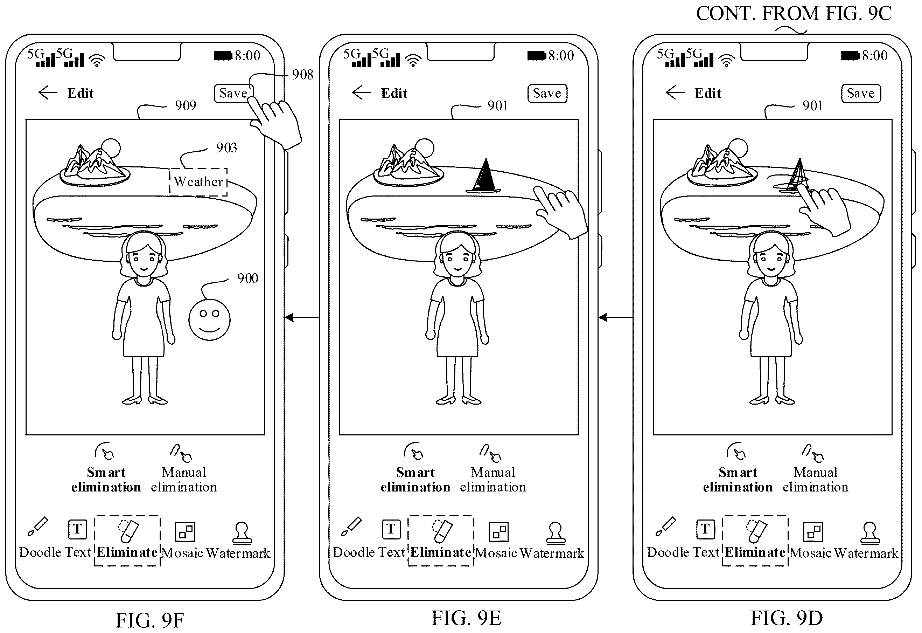

For example, FIG. 9A, FIG. 9B, FIG. 9C, FIG. 9D, FIG. 9E, and FIG. 9F are an example diagram 1 of a picture processing method according to an embodiment of this application. The gallery APP of the mobile phone may include one or more pictures. After the mobile phone receives an operation of selecting a picture in the gallery APP by the user and performs an editing operation on the picture, the interface of the mobile phone is displayed as the interface shown in FIG. 9A. The interface displayed on the mobile phone includes a picture 901, a share icon, a favorite icon, an edit icon 902, a delete icon, and a more icon. The picture 901 includes a text layer and a sticker layer. The text layer includes "Weather" 903, and the sticker layer includes a sticker smiley face 900. When the mobile phone detects a triggering operation on a certain icon by the user, the mobile phone may perform a corresponding operation on the picture 901. For example, when the mobile phone detects a triggering operation on the edit icon 102 by the user, the display interface of the mobile phone switches from FIG. 9A to FIG. 9B.

As shown in the interface in FIG. 9B, the interface displayed on the mobile phone includes a picture 901 and a first-level toolbar 904. The first-level toolbar 904 may include a doodle icon, a text icon, an eliminate icon 905, a mosaic icon, and a watermark icon.

In some embodiments, the first-level toolbar 904 may further include a beauty icon, a filter icon, a photo frame icon, a blur icon, a splash icon, a sticker icon, and the like.

It may be understood that, in a case that a screen size of the mobile phone is limited, the content of the first-level toolbar 904 may be incapable of being fully displayed. When the mobile phone receives a slide or drag operation on the first-level toolbar 904 by the user, the first-level toolbar 904 may display hidden content. For example, on the mobile phone interface, the content displayed in the first-level toolbar 904 includes a doodle icon, a text icon, an eliminate icon, a mosaic icon, and a watermark icon, and the hidden content includes a beauty icon, a filter icon, a photo frame icon, a blur icon, a splash icon, and a sticker icon. The mobile phone responds to the slide or drag operation on the first-level toolbar 904 by the user, and the first-level toolbar on the mobile phone interface may display the hidden content. In this way, users can select the required functions in the first-level toolbar without unfolding the second-level toolbar, which makes it easier for users to find various functions, reduces the quantity of interface jumps, and makes user operations more convenient.

When the mobile phone detects a triggering operation on the eliminate icon 905 in the first-level toolbar 904 by the user, the display interface of the mobile phone switches from FIG. 9B to FIG. 9C.

As shown in the interface in FIG. 9C, the interface displayed on the mobile phone includes a picture 901, a first-level toolbar, a second-level toolbar, and prompt information. The prompt information is used for prompting how to eliminate elements in the picture. As shown in FIG. 9C, the prompt information is "Tap or slide on the target object to eliminate it". The second-level toolbar includes a smart elimination control 906 and a manual elimination control 907. When the mobile phone detects a triggering operation on the smart elimination control 906 by the user, the display interface of the mobile phone switches from FIG. 9C to FIG. 9D.

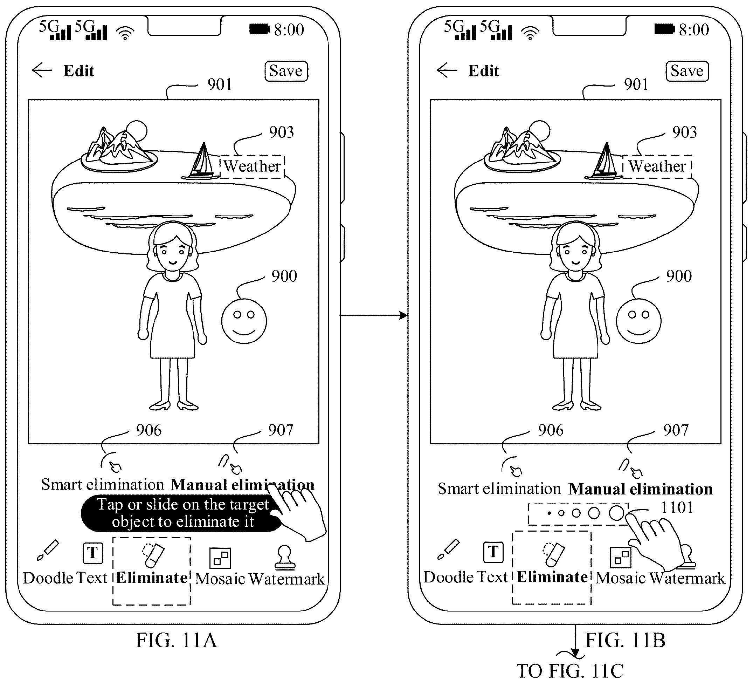

Similarly, when the mobile phone detects a triggering operation on the manual elimination control 907 by the user, the display interface of the mobile phone switches from FIG. 11A to FIG. 11B. The detailed process of manually eliminating elements in the picture will be described subsequently, and details are not described herein again.

As shown in the interface in FIG. 9D, when the mobile phone detects a slide operation on a boat in the picture 901 by the user, the mobile phone automatically recognizes the boat. After the mobile phone recognizes a profile of the boat, the display interface of the mobile phone switches from FIG. 9D to FIG. 9E.

As shown in the interface in FIG. 9E, the mobile phone's display interface includes a picture 901, a first-level toolbar, and a second-level toolbar, and the boat in the picture 901 is being recognized. The picture 901 includes no text "Weather" 903 and no smiley face 900. When the mobile phone detects that the slide operation by the user ends, the display interface of the mobile phone switches from FIG. 9E to FIG. 9F.

In this embodiment of this application, after the mobile phone eliminates an element in the picture, the mobile phone may automatically recognize a color around the eliminated element and use the recognized color to fill the position of the eliminated element. For example, as shown in FIG. 9F, after the mobile phone eliminates the boat in the picture, the mobile phone fills the boat's position with the color around the boat in the picture 909. Therefore, the picture after the elimination processing is more realistic and natural.

As shown in an interface in FIG. 9F, the mobile phone's display interface includes a picture 909, a first-level toolbar, a second-level toolbar, and a save button 908. The picture 909 is a picture after the elimination processing. The picture 909 includes text "Weather" 903 and a smiley face 900. When the mobile phone detects a triggering operation on the save button 908 by the user, the mobile phone saves the picture 909 after the elimination processing.

It is to be noted that, after the mobile phone saves the picture 909, the mobile phone may also perform editing processing on the saved picture 909 in response to the user's operation.

From the picture processing process of FIG. 9A, FIG. 9B, FIG. 9C, FIG. 9D, FIG. 9E, and FIG. 9F, it can be seen that the mobile phone may perform smart elimination on an element in the picture in response to the user's triggering operation. When the mobile phone detects the user's slide operation on an element in the picture, the mobile phone may recognize the element. When the mobile phone detects that the user's slide operation ends, the picture after smart elimination processing is displayed on the display interface of the mobile phone. Therefore, the user can intuitively see the picture after the elimination processing. If the user is satisfied with the picture after the elimination processing, the user can trigger the save button to save the processed picture without triggering the mobile phone to jump to other interfaces. Compared with FIG. 2A, FIG. 2B, FIG. 2C, and FIG. 2D to FIG. 4, the user needs to perform a return operation and jump to a save interface to save the processed picture. In this embodiment of this application, the mobile phone can directly save the picture after the elimination processing on the editing interface, reducing the user's triggering operations and making it more convenient for the user to save the picture after the elimination processing.

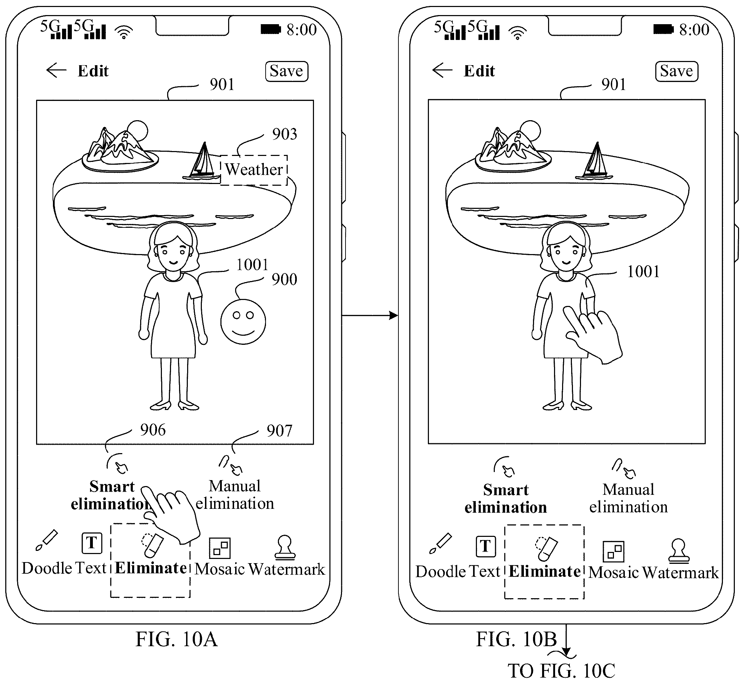

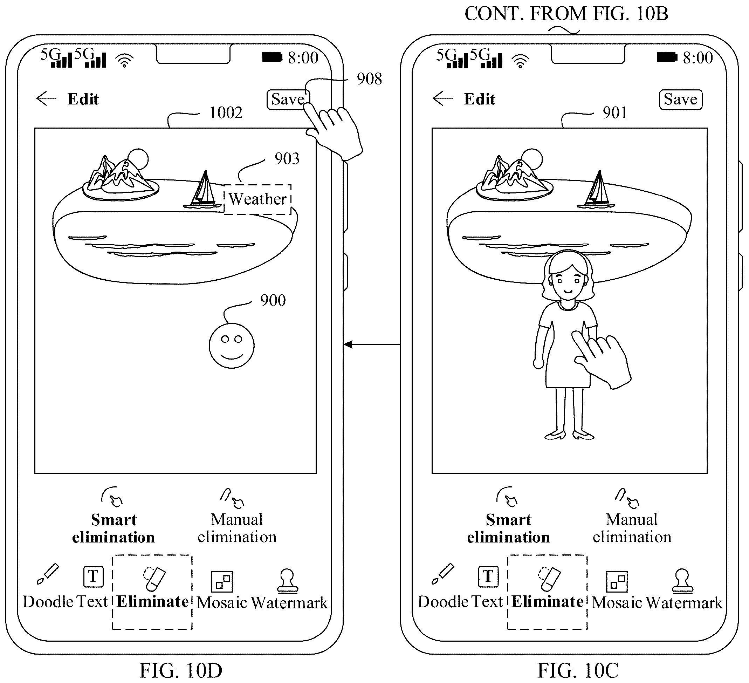

In FIG. 9A, FIG. 9B, FIG. 9C, FIG. 9D, FIG. 9E, and FIG. 9F above, an exemplary description of eliminating an element in a picture after the mobile phone detects that the user performs a slide operation on the element in the picture is provided. The following is an exemplary description of the process of eliminating an element in a picture after the mobile phone detects that the user performs a tap operation on the element in the picture with reference to FIG. 10A, FIG. 10B, FIG. 10C, and FIG. 10D.

FIG. 10A, FIG. 10B, FIG. 10C, and FIG. 10D are an example diagram 2 of a picture processing method according to an embodiment of this application. As shown in an interface in FIG. 10A, the mobile phone's display interface includes a picture 901, a first-level toolbar, and a second-level toolbar. The picture 901 includes text "Weather" 903, a smiley face 900, a seaside background, and a character 1001. When the mobile phone detects a triggering operation on the smart elimination control 906 by the user, the display interface of the mobile phone switches from FIG. 10A to FIG. 10B.

As shown in the interface in FIG. 10B, when the mobile phone detects a tap operation on the character 1001 by the user, the display interface of the mobile phone switches from FIG. 10B to FIG. 10C. As shown in the interface in FIG. 10C, the mobile phone automatically recognizes a profile of the character 1001. When the mobile phone detects that the user stops the tap operation on the character 1001, the display interface of the mobile phone switches from FIG. 10C to FIG. 10D. The tap operation may be a single-tap operation, a double-tap operation, or a multiple-tap operation.

As shown in the interface in FIG. 10D, the mobile phone's display interface includes a picture 1002 and a save button 908. The picture 1002 is a picture after the elimination processing. The picture 1002 includes text "Weather" 903 and a smiley face 900. When the mobile phone detects a triggering operation on the save button 908 by the user, the mobile phone saves the picture 1002.

It is to be noted that, after the mobile phone eliminates the character 1001, the mobile phone may automatically recognize a color of a region around the character 1001 in the picture 1002, and then use the color of the region around the character 1001 to fill a position of the character 1001, making the picture after the elimination processing more realistic and natural.

As can be seen from the picture processing process of FIG. 10A, FIG. 10B, FIG. 10C, and FIG. 10D, when the mobile phone detects a tap operation on an element in the picture by the user, the mobile phone can automatically recognize the element. When the mobile phone detects that the user's tap operation ends, the picture after smart elimination processing is displayed on the display interface of the mobile phone. Therefore, the user can intuitively see the picture after the elimination processing. If the user is satisfied with the picture after the elimination processing, the user can trigger the save button to save the processed picture without triggering the mobile phone to jump to other interfaces, which reduces the user's triggering operations, and makes it more convenient for the user to save the picture after the elimination processing.

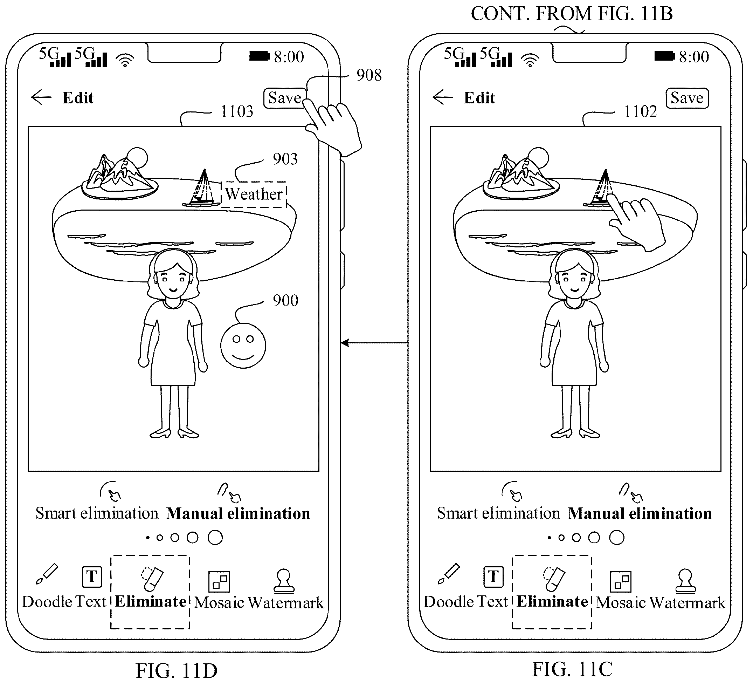

The following describes a process in which a mobile phone manually eliminates an element in a picture in response to a user's manual elimination operation with reference to FIG. 11A, FIG. 11B, FIG. 11C, and FIG. 11D.

FIG. 11A, FIG. 11B, FIG. 11C, and FIG. 11D are an example diagram 3 of a picture processing method according to an embodiment of this application. As shown in the editing interface in FIG. 11A, when the mobile phone detects a triggering operation on the manual elimination control 907 by the user, the display interface of the mobile phone switches from FIG. 11A to FIG. 11B.

As shown in the interface in FIG. 11B, the interface displayed on the mobile phone includes a picture 901, a first-level toolbar, and a second-level toolbar. The picture 901 includes a smiley face sticker 900 and text "Weather" 903. The second-level toolbar includes a smart elimination control 906, a manual elimination control 907, and a manual adjustment icon 1101. The manual adjustment icon 1101 is configured to adjust the thickness of the elimination pen during manual elimination on a picture. When the mobile phone detects a manual elimination operation on the boat in the picture 901 by the user, the elimination process is displayed on the mobile phone's display interface, as shown in FIG. 11C.

As shown in the interface in FIG. 11C, the mobile phone's display interface includes a picture 1102, a first-level toolbar, and a second-level toolbar. The picture 1102 includes no text "Weather" 903 and no smiley face sticker 900. After the mobile phone detects that the user stops the slide operation on the picture, the display interface of the mobile phone switches from FIG. 11C to FIG. 11D.

As shown in the interface in FIG. 11D, the mobile phone's display interface includes a picture 1103, a first-level toolbar, a second-level toolbar, and a save button 908. The picture 1103 is a picture after manual elimination processing. The picture 1103 includes text "Weather" 903 and a smiley face sticker 900. When the mobile phone detects a triggering operation on the save button 908 by the user, the mobile phone saves the picture 1103.

It is to be noted that, after the mobile phone eliminates a partial region ofthe boat in the picture 1103, the mobile phone may automatically recognize a color around the boat after the elimination and use the recognized color to fill the eliminated region of the boat.

From the picture processing process in FIG. 11A, FIG. 11B, FIG. 11C, and FIG. 11D above, it can be seen that when the mobile phone detects a slide operation on an element in the picture by the user, after the mobile phone eliminates an element in the user's sliding region, the picture after the elimination processing of the mobile phone is displayed on the display interface of the mobile phone, so that the user can view the effect of the elimination processing in real time. During saving of the picture after the elimination processing, the user can trigger the save button to save the processed picture, which reduces the user's triggering operations, and makes it more convenient for the user to save the picture after the elimination processing.

In some embodiments, after the mobile phone performs smart elimination processing on certain elements in the picture, the mobile phone may also continue to perform manual elimination processing on elements in the picture in response to the user's slide operation. Therefore, through the combination of smart elimination and manual elimination, some elements in the picture can be eliminated more accurately.

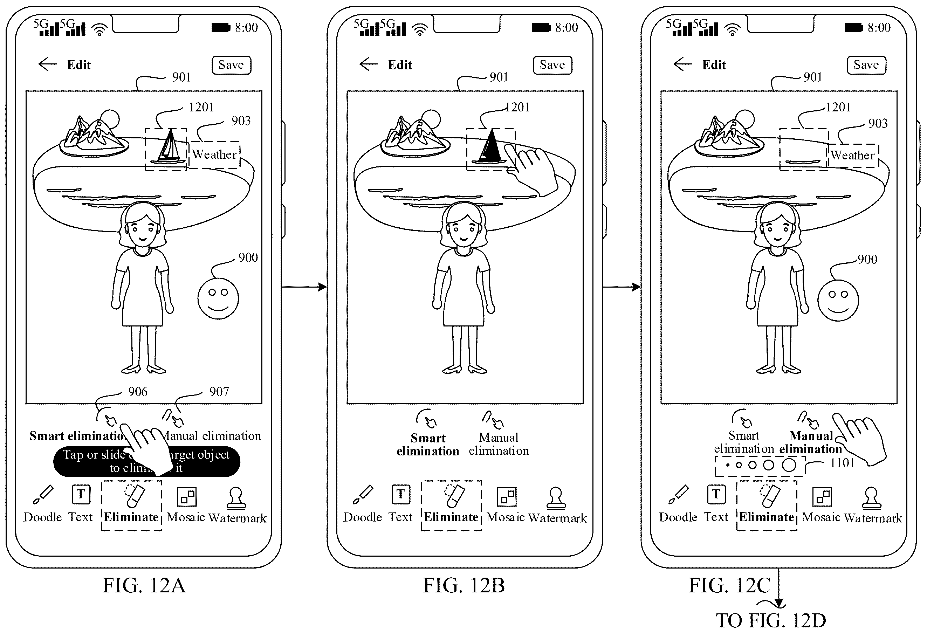

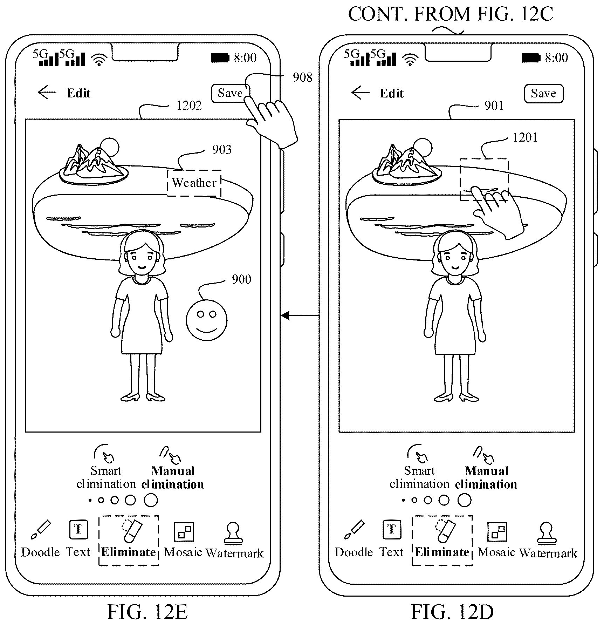

For example, FIG. 12A, FIG. 12B, FIG. 12C, FIG. 12D, and FIG. 12E are an example diagram 4 of a picture processing method according to an embodiment of this application. As shown in the interface in FIG. 12A, the interface displayed on the mobile phone includes a picture 901, a first-level toolbar, a second-level toolbar, and prompt information. The picture 901 includes a smiley face sticker 900, text "Weather" 903, a boat 1201, and the like. The second-level toolbar includes a smart elimination control 906 and a manual elimination control 907. When the mobile phone detects a triggering operation on the smart elimination control 906 by the user, the display interface of the mobile phone switches from FIG. 12A to FIG. 12B.

As shown in the interface in FIG. 12B, when the mobile phone detects a triggering operation on the boat 1201 in the picture 901 by the user, the mobile phone automatically recognizes the boat 1201. When the mobile phone detects that the user's triggering operation on the boat 1201 ends, the display interface of the mobile phone switches from FIG. 12B to FIG. 12C.

As shown in the interface in FIG. 12C, the picture 901 displayed on the mobile phone's display interface still includes a part of the boat 1201. In this case, the user may select a manual elimination manner to eliminate the remaining part of the boat 1201. When the mobile phone detects a triggering operation on the manual elimination control 907 by the user, the display interface of the mobile phone switches from FIG. 12C to FIG. 12D.

As shown in the interface in FIG. 12D, when the mobile phone detects a slide operation by the user, the mobile phone eliminates the remaining part of the boat 1201, and the display interface of the mobile phone displays the elimination process in real time. When the mobile phone detects that the slide operation by the user ends, the display interface of the mobile phone switches from FIG. 12D to FIG. 12E. The picture 1202 shown in FIG. 12E is a picture after smart elimination and manual elimination. When the mobile phone detects a triggering operation on the save button 908 by the user, the mobile phone saves the picture 1202.

In some embodiments, when the mobile phone detects a slide operation or a tap operation on the picture by the user, the stackable element in the picture displayed on the mobile phone's display interface is hidden. That is, in the process in which the mobile phone eliminates an element in the picture, no stackable element is displayed on the picture. Therefore, the problem that the stackable element blocks original elements in the picture, resulting in that the user cannot accurately eliminate the elements in the picture is avoided, thereby improving the accuracy of picture processing.

It is to be noted that according to the logical layer shown in FIG. 7, at the logical layer, the elimination function is at a lower layer of the stackable material and the effect material, so that the elimination function can only eliminate the original elements in the picture, and cannot eliminate text, a watermark, a sticker, a doodle, or the like added to the picture. In a process in which the mobile phone performs elimination, the stackable element in the picture is temporarily not displayed. After the mobile phone determines that the elimination operation is completed, the stackable element is redisplayed on the picture. Therefore, in the elimination process, the mobile phone controls the stackable element to be temporarily not displayed in the picture, thereby avoiding the problem that the stackable element blocks the picture, resulting in that the user cannot accurately eliminate the elements in the picture.

For example, on each of the interfaces shown in FIG. 9A, FIG. 9B, and FIG. 9C, the picture 901 includes text "Weather" 903 and a smiley face sticker 900. When the mobile phone detects a slide operation on a boat in the picture 901 by the user and triggers an elimination process, no text "Weather" 903 and no smiley face sticker 900 are displayed on the display interface of the mobile phone, as shown in the interfaces in FIG. 9D and FIG. 9E. When the mobile phone detects that the user's slide operation ends, the text "Weather" 903 and the smiley face sticker 900 are redisplayed on the display interface of the mobile phone, as shown in the interface in FIG. 9F.

In another example, on the interface shown in FIG. 10A, the picture 901 includes text "Weather" 903 and a smiley face sticker 900. When the mobile phone detects a tap operation on the character 1001 in the picture 901 by the user and triggers an elimination process, no text "Weather" 903 and no smiley face sticker 900 are displayed on the display interface of the mobile phone, as shown in interfaces in FIG. 10B and FIG. 10C. When the mobile phone detects that the user's tap operation ends, the text "Weather" 903 and the smiley face sticker 900 are redisplayed on the display interface of the mobile phone, as shown in the interface in FIG. 10D.

In another example, on each of the interfaces shown in FIG. 11A and FIG. 11B, the picture 901 includes text "Weather" 903 and a smiley face sticker 900. When the mobile phone detects a slide operation on a boat in the picture 901 by the user and triggers an elimination process, no text "Weather" 903 and no smiley face sticker 900 are displayed on the display interface of the mobile phone, as shown in the interface in FIG. 11C. When the mobile phone detects that the user's slide operation ends, the text "Weather" 903 and the smiley face sticker 900 are redisplayed on the display interface of the mobile phone, as shown in the interface in FIG. 11D.

In FIG. 9A, FIG. 9B, FIG. 9C, FIG. 9D, FIG. 9E, and FIG. 9F to FIG. 11A, FIG. 11B, FIG. 11C, and FIG. 11D, a description is provided by using an example in which the stackable element includes text and a sticker. The stackable element may alternatively include a doodle, a watermark, and the like, and details are not described one by one again herein.

In some other embodiments, in the process in which the mobile phone performs an elimination operation, when the mobile phone detects a slide operation on a picture by the user, if the mobile phone detects that a distance between a stackable element in the picture and the user's sliding contact point is less than a first distance, the mobile phone controls the stackable element to be hidden. The first distance is a preset value. For example, the first distance may be 10 dp, 12 dp, or the like.

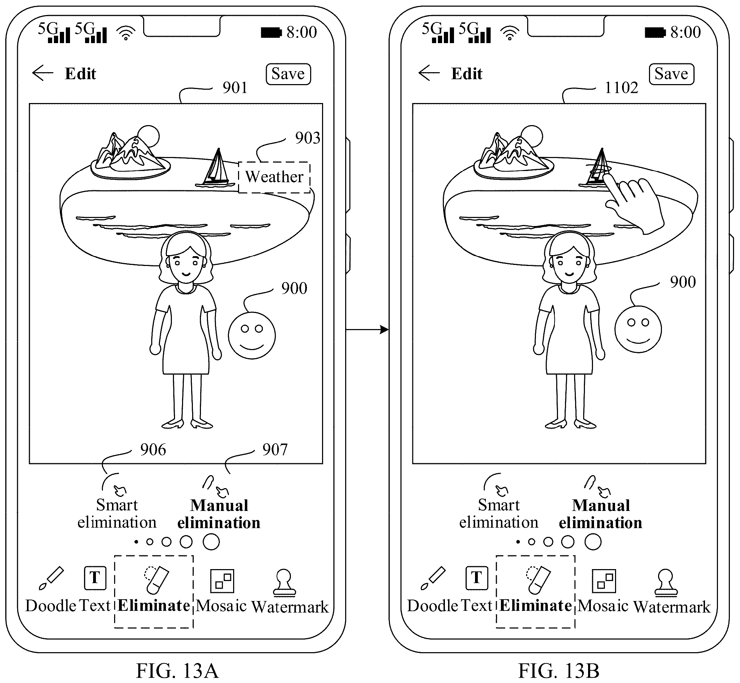

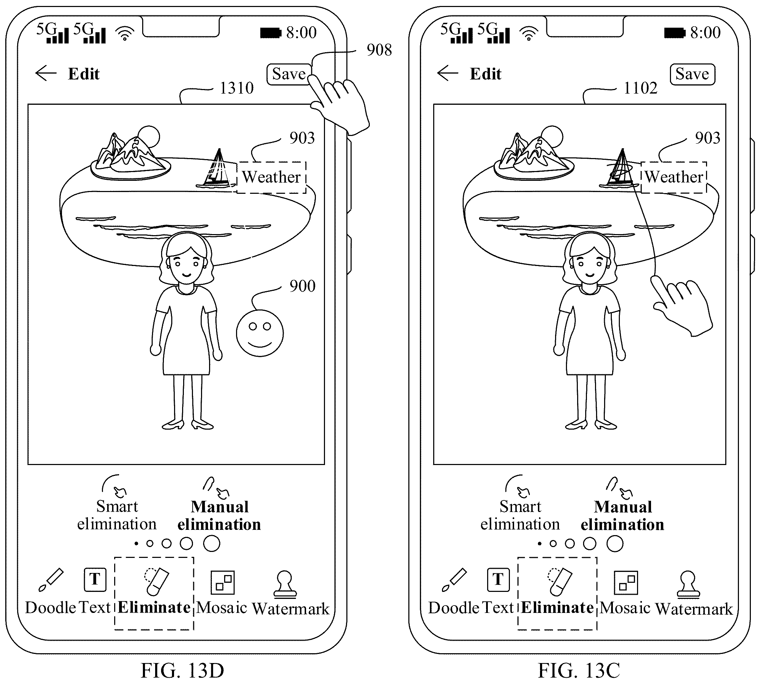

For example, FIG. 13A, FIG. 13B, FIG. 13C, and FIG. 13D are an example diagram 5 of a picture processing method according to an embodiment of this application. As shown in the interface in FIG. 13A, when the mobile phone detects a triggering operation on the manual elimination control 907 by the user, the display interface of the mobile phone switches from FIG. 13A to FIG. 13B.

As shown in the interface in FIG. 13B, when the mobile phone detects a slide operation on the boat in the picture 901 by the user, the mobile phone detects that a distance between the stackable element text "Weather" 903 and the sliding contact point is less than the first distance, and the stackable element text "Weather" 903 is not displayed on the display interface of the mobile phone. In a process in which the user slides to eliminate an element in the picture, a position of the sliding contact point is the position on the interface shown in FIG. 13C. The mobile phone detects that a distance between the stackable element sticker smiley face 900 and the sliding contact point is less than the first distance, and the stackable element sticker smiley face 900 is not displayed on the display interface of the mobile phone. In this case, the mobile phone detects that a distance between the sliding contact point and the stackable element text "Weather" 903 is greater than the first distance, and the stackable element text "Weather" 903 is redisplayed on the display interface of the mobile phone. When the mobile phone detects that the user's slide operation ends, that is, the user lifts the hand away from the display screen, a picture 1310 after the elimination processing is displayed on the display interface of the mobile phone, and the stackable element text "Weather" 903 and the sticker smiley face 900 are displayed on the picture 1310, as shown in FIG. 13D. When the mobile phone detects a triggering operation on the save button 908 by the user, the mobile phone saves the picture 1310.

In this embodiment of this application, when a video is stored in the gallery APP of the mobile phone, the mobile phone may also perform elimination processing on elements in each image frame of the video. For a specific elimination processing process, reference may be made to the foregoing process of performing elimination processing on elements in the picture, and details are not described herein again.

The following describes the specific implementations of the image processing method provided in the embodiments of this application in detail with reference to the accompanying drawings.

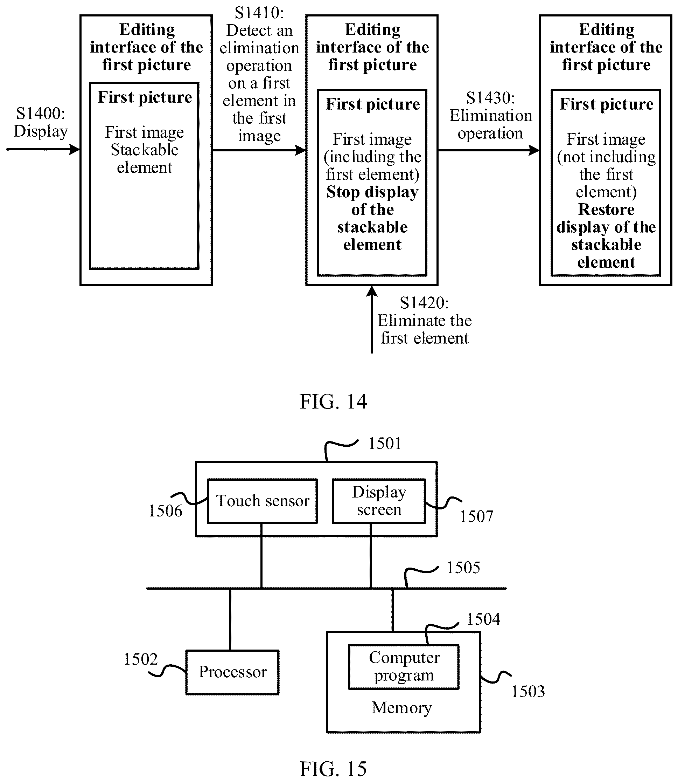

FIG. 14 is a flowchart of an image processing method according to an embodiment of this application. The image processing method may be applied to the electronic device shown in FIG. 5 and FIG. 6. As shown in FIG. 14, the image processing method may include S1400 to S1430.

S1400: Display an editing interface of a first picture.

The first picture includes a first image and a stackable element. For example, the first picture may be the picture 901 shown in FIG. 9A. The stackable element may be a watermark, a sticker, text, a doodle, or the like. For example, the stackable element may be the text "Weather 903" and the sticker smiley face 900 shown in FIG. 9A.

The editing interface of the first picture refers to an interface on which editing processing can be performed on elements in the first picture. For example, the editing interface may be the interface shown in FIG. 9B to FIG. 9D, or the editing interface may be the interface shown in FIG. 10A to FIG. 10D, or the editing interface may be the interface shown in FIG. 11A to FIG. 11D.

S1410: Control, in response to detecting an elimination operation on a first element in the first image, to stop display of the stackable element on the editing interface.

In this embodiment of this application, when detecting that the elimination operation on the first element in the first image starts, the electronic device controls to stop display of the stackable element in response to the start of the elimination operation.

As shown in FIG. 9A, FIG. 9B, FIG. 9C, FIG. 9D, FIG. 9E, and FIG. 9F, when the mobile phone detects the user's elimination operation on the boat in the picture 901, the mobile phone controls to stop display of the text "Weather 903" and the sticker smiley face 900. No stackable element is displayed on the editing interfaces shown in FIG. 9D and FIG. 9E. After the elimination operation is completed, the stackable element is redisplayed on the editing interface of the picture 901, and the text "Weather 903" and the sticker smiley face 900 are redisplayed on the editing interface shown in FIG. 9F.

In this embodiment of this application, in response to the elimination operation on the first element in the first picture, for any stackable element on the first picture, the electronic device may determine, according to a distance between the stackable element and a first position, whether to control to stop display of the stackable element. The first position is a position at which the elimination operation is performed on the display screen, for example, a position at which the user performs a slide operation on the display screen.

In one case, if the electronic device determines that a distance between a first stackable element and the first position is less than a first distance (the first distance is a preset distance), the electronic device controls to stop display of the first stackable element. For example, the first distance may be 10 dp, 12 dp, or the like. When the electronic device determines that the distance between the first stackable element that has been stopped from being displayed and the first position is greater than the first distance, the electronic device controls to restore display of the first stackable element.

In another case, if the electronic device determines that a distance between a second stackable element and the first position is greater than the first distance, the electronic device controls to continue display of the second stackable element.

For example, as shown in the position on the interface shown in FIG. 13B, the mobile phone detects that a distance between the stackable element sticker smiley face 900 and the first position is greater than the first distance, and the stackable element sticker smiley face 900 continues to be displayed on the display interface of the mobile phone. In this case, the mobile phone detects that a distance between the first position and the stackable element text "Weather" 903 is less than the first distance, and the stackable element text "Weather" 903 stops being displayed on the display interface of the mobile phone. When the mobile phone detects that the distance between the first position and the stackable element text "Weather" 903 is greater than the first distance, as shown in FIG. 13C, the text "Weather" 903 is redisplayed on the display interface of the mobile phone.

It is to be noted that the foregoing elimination operation may be a tap operation or a slide operation. The tap operation may be a single-tap operation, a double-tap operation, or a multiple-tap operation. For example, the electronic device controls, in response to detecting a tap or slide operation on the first element, to stop display of the stackable element on the editing interface.

S 1420: Eliminate the first element on the editing interface in response to the elimination operation on the first element in the first image.

In this embodiment of this application, the editing interface of the first picture includes a first control and a second control. The first control may be a smart elimination control, and the second control may be a manual elimination control. Certainly, the first control may alternatively be a manual elimination control, and the second control may be a smart elimination control. This is not a limited herein.

For example, the first control may be the smart elimination control in FIG. 9A, FIG. 9B, FIG. 9C, FIG. 9D, FIG. 9E, and FIG. 9F to FIG. 13A, FIG. 13B, FIG. 13C, and FIG. 13D, and the second control may be the manual elimination control in FIG. 9A, FIG. 9B, FIG. 9C, FIG. 9D, FIG. 9E, and FIG. 9F to FIG. 13A, FIG. 13B, FIG. 13C, and FIG. 13D.

In an embodiment, the electronic device may determine to eliminate the first element in a first elimination manner in response to a triggering operation on the first control by the user. The first elimination manner is used for eliminating the element selected by the elimination operation. Thereafter, the electronic device may alternatively determine to eliminate a second element in a second elimination manner in response to a triggering operation on the second control by the user. The second elimination manner is eliminating a partial region selected in an element targeted by the elimination operation.

The second element may be a residual part of the first element, or the second element may be another element unrelated to the first element. For example, the first element is the boat shown in FIG. 12A, and the second element is a residual part of the boat shown in FIG. 12C. In another example, the first element is the boat shown in FIG. 10A, and the second element is the character shown in FIG. 10A.

In another embodiment, the electronic device may directly eliminate the first element in the second elimination manner in response to a triggering operation on the second control. For example, as shown in FIG. 13A, the mobile phone may determine to eliminate the first element in a manual elimination manner in response to a triggering operation on the manual elimination control 907 by the user.

In this embodiment of this application, after eliminating the first element, the electronic device determines a target color according to a color on the first image that is within a preset range at which the first element is located. Subsequently, the electronic device may fill a position of the first element with the target color. That is, the electronic device may determine the target color according to the color around the first element. The position of the first element on the first image from which the first element has been eliminated on the editing interface is filled with the target color.

The target color may be the same color, or may be different colors, which is not limited herein.

S1430: Display, on the editing interface, the first image from which the first element has been eliminated, and restore display of the stackable element.

For example, as shown in FIG. 13D, the mobile phone detects that a slide operation ends. In response to the end of the slide operation, the mobile phone displays, on the editing interface, the first image from which the partial region of the boat has been eliminated, and restores display of the stackable element.

In this embodiment of this application, the editing interface further includes a save button. After the electronic device displays the first image from which the first element has been eliminated and the stackable element on the editing interface, the electronic device may save a second picture in response to detecting a triggering operation on the save button. The second picture includes the first image from which the first element has been eliminated and the stackable element.

For example, as shown in FIG. 9F, the mobile phone detects a triggering operation on the save button 908 by the user, and in response to the triggering operation, the mobile phone saves the picture 909.

It can be seen that the user may directly trigger the save button on the editing interface to save the picture after the elimination processing. The user can save the processed picture on the editing interface without switching pages, which has the advantages of simple and convenient operations.

As shown in FIG. 15, an embodiment of this application discloses an electronic device, and the electronic device may be the foregoing mobile phone. The electronic device may specifically include: a touch screen 1501, where the touch screen 1501 includes a touch sensor 1506 and a display screen 1507; one or more processors 1502; a memory 1503; one or more applications (not shown); and one or more computer programs 1504. These various components may be connected via one or more communication buses 1505. The one or more computer programs 1504 are stored in the memory 1503 and are configured to be executed by the one or more processors 1502. The one or more computer programs 1504 include instructions, and the instructions may be used to perform related steps in the foregoing embodiments.

It may be understood that, to implement the foregoing functions, the electronic device and the like include corresponding hardware structures and/or software modules for performing the functions. A person skilled in the art should be easily aware that units, algorithms, and steps in examples described with reference to embodiments disclosed in this specification can be implemented in embodiments of this application by hardware or a combination of hardware and computer software. Whether a function is implemented by hardware or computer software driving hardware depends on particular applications and design constraints of the technical solutions. A person skilled in the art may use different methods to implement the described functions for each particular application, but it should not be considered that this implementation goes beyond the scope of embodiments of the present disclosure.

Functional module division may be performed on the electronic device based on the foregoing method example in the embodiments of this application. For example, the functional modules may be obtained through division for corresponding functions, or two or more functions may be integrated into one processing module. The integrated module is implemented in the form of hardware, or is implemented in the form of a software functional module. It is to be noted that, in this embodiment of the present disclosure, the division of the modules is merely an example, and is merely division of logical functions. During actual implementation, there may be another division manner.

When functional modules are obtained through division by using corresponding functions, according to a diagram of possible composition of an electronic device related to the foregoing embodiments, the electronic device may include: a display unit, a transmission unit, a processing unit, and the like. It is to be noted that, all related content of the steps in the foregoing method embodiment may be quoted to functional descriptions of corresponding functional modules, and details are not described herein again.

An embodiment of this application further provides an electronic device, including one or more processors and one or more memories. The one or more memories are coupled to the one or more processors, the one or more memories are configured to store computer program code, the computer program code includes computer instructions, and when the one or more processors execute the computer instructions, the electronic device is enabled to perform the related method steps to implement the picture processing method in the foregoing embodiments.

An embodiment of this application further provides a computer-readable storage medium. The computer-readable storage medium stores computer instructions. When the computer instructions are run on an electronic device, the electronic device is enabled to perform the related method steps to implement the picture processing method in the foregoing embodiments.

An embodiment of this application further provides a computer program product. The computer program product includes computer instructions. When the computer instructions are run on an electronic device, the electronic device is enabled to perform the related method steps to implement the picture processing method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus is run, the processor may execute the computer-executable instructions stored in the memory, to enable the apparatus to perform the picture processing method performed by an electronic device in the foregoing method embodiments.

The electronic device, the computer-readable storage medium, the computer program product, or the apparatus provided in this embodiment are all used to execute the corresponding method provided above. Therefore, for beneficial effect that can be achieved by the electronic device, the computer-readable storage medium, and the computer program product, or the apparatus, refer to beneficial effect of the corresponding method provided above. Details are not described herein again.

The foregoing descriptions about implementations allow a person skilled in the art to clearly understand that, for the purpose of convenient and brief description, division of the foregoing functional modules is used as an example for illustration. During actual application, the foregoing functions can be allocated to different modules for implementation according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the embodiments of this application, functional units in the embodiments may be integrated into one processing unit, or each of the units may exist alone physically, or two or more units are integrated into one unit. The integrated unit may be implemented in the form of hardware, or may be implemented in a form of a software functional unit.

If the integrated unit is implemented in the form of a software functional unit and sold or used as an independent product, the integrated unit may be stored in a computer-readable storage medium. Based on such an understanding, the technical solutions of embodiments of this application essentially, or the part contributing to a conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the method described in embodiments of this application. The foregoing storage medium includes: any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A picture processing method, comprising:
displaying an editing interface of a first picture, wherein the first picture comprises a first image and a stackable element;
controlling, in response to detecting an elimination operation on a first element in the first image, to stop display of the stackable element on the editing interface;
eliminating the first element on the editing interface in response to the elimination operation on the first element in the first image; and
displaying, on the editing interface, the first image from which the first element has been eliminated, and restoring display of the stackable element.

2. The method according to claim 1, wherein the displaying, on the editing interface, the first image from which the first element has been eliminated, and restoring display of the stackable element comprises:
in response to completion of the elimination operation, displaying, on the editing interface, the first image from which the first element has been eliminated, and restoring display of the stackable element.

3. The method according to claim 1, wherein the controlling, in response to detecting an elimination operation on a first element in the first image, to stop display of the stackable element on the editing interface comprises:
in response to detecting the elimination operation on the first element in the first picture, if it is determined that a distance between a first stackable element and a first position is less than a first distance, controlling to stop display of the first stackable element, wherein the first position is a position at which the elimination operation is performed on a display screen; and
the method further comprises:
if it is determined that a distance between a second stackable element and the first position is greater than the first distance, controlling to continue display of the second stackable element.

4. The method according to claim 3, further comprising:
restoring display of the first stackable element when the distance between the first stackable element that has been stopped from being displayed and the first position is greater than the first distance.

5. The method according to any one of claims 1 to 4, wherein the editing interface comprises a first control, and the method further comprises:
determining, in response to a triggering operation on the first control, to eliminate an element in the first image in a first elimination manner, wherein the first elimination manner is used for eliminating an element selected by the elimination operation; and
the eliminating the first element on the editing interface in response to the elimination operation on the first element in the first image comprises:
eliminating, on the editing interface and in response to the elimination operation on the first element in the first image, the first element selected by the elimination operation.

6. The method according to claim 5, wherein the editing interface comprises a second control, and the method further comprises:
determining, in response to a triggering operation on the second control, to eliminate an element in the first image in a second elimination manner, wherein the second elimination manner is eliminating a partial region selected in an element targeted by the elimination operation; and
eliminating, on the editing interface and in response to an elimination operation on a second element in the first image, a region selected by the elimination operation in the second element.

7. The method according to any one of claims 1 to 6, wherein the editing interface comprises a second control, and the method further comprises:
determining, in response to a triggering operation on the second control, to eliminate the first element in the second elimination manner; and
the eliminating the first element on the editing interface in response to the elimination operation on the first element in the first image comprises:
eliminating, on the editing interface and in response to the elimination operation on the first element in the first picture, a region selected by the elimination operation in the first element.

8. The method according to any one of claims 1 to 7, wherein the elimination operation comprises a tap or slide operation, and the controlling, in response to detecting an elimination operation on a first element in the first image, to stop display of the stackable element on the editing interface comprises:
controlling, in response to detecting a tap or slide operation on the first element, to stop display of the stackable element on the editing interface.

9. The method according to any one of claims 1 to 8, wherein after the eliminating the first element on the editing interface in response to the elimination operation on the first element in the first image, the method further comprises:
determining a target color according to a color on the first image that is within a preset range at which the first element is located; and
filling a position of the first element with the target color, wherein the position of the first element on the first image from which the first element has been eliminated on the editing interface is filled with the target color.

10. The method according to any one of claims 1 to 9, wherein the editing interface comprises a save button, and after the displaying, on the editing interface, the first image from which the first element has been eliminated and the stackable element, the method further comprises:
saving a second picture in response to detecting a triggering operation on the save button, wherein the second picture comprises the first image from which the first element has been eliminated and the stackable element.

11. An electronic device, comprising:
a display screen, wherein the display screen is configured to display an editing interface of a picture;
one or more processors; and
a memory, wherein
the memory stores one or more computer programs, and the one or more computer programs comprise instructions; and when the instructions are executed by the processor, the electronic device is enabled to perform the method according to any one of claims 1 to 10.

12. A computer-readable storage medium, wherein the computer-readable storage medium stores instructions, and when the instructions are read and executed by one or more processors, the method according to any one of claims 1 to 10 is performed.
